# EUROPÄISCHE PATENTSCHRIFT

(11) **EP 4 176 240 B1**
(45) Veröffentlichungstag und Bekanntmachung des Hinweises auf die Patenterteilung: **28.08.2024**
(21) Anmeldenummer: 21742335.9
(22) Anmeldetag: 05.07.2021
(51) Int. Cl.: G01M 3/36, B07C 5/34, B65B 7/28, B65B 57/04

(54) **VERFAHREN UND VORRICHTUNG ZUM PRÜFEN DER DICHTHEIT EINES VERSCHLUSSES**
METHOD AND DEVICE FOR CHECKING THE SEALING TIGHTNESS OF A CLOSURE
PROCÉDÉ ET DISPOSITIF DE VÉRIFICATION D'ÉTANCHÉITÉ DE FERMETURE

(30) Priorität: 06.07.2020 DE 102020117790
(43) Veröffentlichungstag der Anmeldung: 10.05.2023
(73) Patentinhaber: GRONINGER & CO. GMBH, 74564 Crailsheim (DE)
(72) Erfinder: HAAG, Manfred, 74564 Crailsheim (DE); MICHAEL, Lars, 74532 Ilshofen (DE)
(74) Vertreter: Witte, Weller & Partner Patentanwälte mbB
(86) Internationale Anmeldenummer: PCT/EP2021/068541
(87) Internationale Veröffentlichungsnummer: WO 2022/008460

(56) Entgegenhaltungen:
- DE-A1- 102005 023 067
- DE-A1- 19 614 475
- US-A- 4 315 427
- US-A- 4 511 044
- MATHAES ROMAN ET AL: "The pharmaceutical vial capping process: Container closure systems, capping equipment, regulatory framework, and seal quality tests", EUROPEAN JOURNAL OF PHARMACEUTICS AND BIOPHARMACEUTICS, ELSEVIER SCIENCE PUBLISHERS B.V., AMSTERDAM, NL, vol. 99, 30 November 2015 (2015-11-30), pages 54 - 64, XP029383018, ISSN: 0939-6411, DOI: 10.1016/J.EJPB.2015.11.016

## Beschreibung

Die vorliegende Erfindung betrifft ein Verfahren und eine Vorrichtung zum Prüfen der Dichtheit eines Verschlusses eines Behältnisses, insbesondere eines pharmazeutischen oder kosmetischen Behältnisses, der eine Verschlusskappe zum Verschließen des Behältnisses und ein elastisches Dichtungselement, das zwischen der Verschlusskappe und einem Mündungsrand des Behältnisses angeordnet ist, aufweist.

Zum Zwecke des Verschließens von mit pharmazeutischen oder kosmetischen Produkten versehenen Behältnissen wie z.B. Vials, Karpulen, Infusionsfläschchen oder dergleichen ist es gängige Praxis, einen aus einem elastischen Dichtungselement (z.B. ein Gummistopfen oder eine Gummischeibe) und einer diesen gegen den Mündungsrand des Behältnisses mit einer definierten Kraft drückenden Bördelkappe bestehenden Verschluss bereitzustellen, um eine ordnungsgemäße Abdichtung des Behältnisses sicherzustellen. Auf diese Weise kann beispielsweise ein Eindringen von Luft, Verunreinigungen oder Keimen in das Behältnis sowie ein Austreten einer Flüssigkeit aus dem Behältnis verhindert werden.

Eine Vorrichtung zum Verschließen von Behältnissen ist beispielsweise aus der DE 10 2005 046 428 A1 bekannt.

Verschlüsse der eingangs genannten Art werden üblicherweise in Abfüll- und Bördelmaschinen erzeugt, wobei die Bördelkappe mit dem elastischen Dichtungselement auf den Mündungsrand des Behälters gedrückt, und der freie Rand der üblicherweise aus Aluminium bestehenden Bördelkappe um einen Flansch oder Wulst am Mündungsrand des Behälters gebördelt wird. Nach der Bördelung ist das elastische Dichtungselement mittels der Bördelkappe gegen einen Mündungsrand des Behältnisses gehalten und somit vorgespannt.

Um eine hinreichend gute Dichtigkeit des Verschlusses zu gewährleisten, muss das elastische Dichtungselement nach Fertigstellung der Bördelung weiterhin in einem angemessen zusammengepressten Zustand gehalten werden. Der nunmehr nach innen gefaltete freie Rand der Bördelkappe kann jedoch nach erfolgter Bördelung unter Einwirkung des vorgespannten elastischen Dichtungselements zurückfedern, was zu einem verminderten Anpressdruck zwischen dem elastischen Dichtungselement und dem Mündungsrand des Behältnisses und schließlich zu einer unzureichenden Dichtungswirkung des Verschlusses führen kann. Vor diesem Hintergrund wurden unterschiedliche Verfahren zur Beurteilung der Verschlusssicherheit der Stopfenverpressung entwickelt, die von einer bloßen Sichtprüfung des verschlossenen Behältnisses zur Bewertung der Bördelqualität bis hin zur Ermittlung der sogenannten "Residual Seal Force" (RSF) reichen.

Eine Sichtprüfung ermöglicht jedoch keine verlässliche Aussage über die Dichtheit des Verschlusses bzw. den Stopfensitz. Als RSF wird die Kraft verstanden, mit der das elastische Dichtungselement zwischen Bördelkappe und Mündungsrand des Behältnisses verspannt ist. Die Messung dieser Kraft erfolgt üblicherweise mit Hilfe eines Prüfsystems, das über einen höhenverstellbaren Druckblock eine zunehmende Prüfkraft auf die Oberseite der Verschlusskappe ausübt, wobei der Zustand gemessen wird, an dem die Flanken der Bördelkappe von dem unteren Flaschenhals abheben. Diese Messungen müssen dann mit etablierten Dichtigkeitsuntersuchungen korreliert werden, so dass der Vorgang lediglich eine indirekte Aussage über die Verschlusssicherheit der Stopfendichtung ermöglicht.

Ein beispielhaftes Verfahren und eine dazugehörige Vorrichtung zum Prüfen der Verschlusssicherheit einer Stopfenverpressung sind beispielsweise aus der DE 10 2005 023 067 A1 bekannt.

Unter Verwendung eines Druckblocks auf eine Oberfläche eines Metalldeckels, welcher über einem mit einem Gummistopfen versehenen Glasfläschchen angebracht ist, kann vorgesehen sein, eine Kraft aufzubringen, um den Gummistopfen zusammenzudrücken. In diesem Zustand erfolgt die Bördelung eines unteren Endes eines zylindrischen Abschnitts des Metalldeckels. Nachfolgend wird die Kraft, die der Oberfläche des Metalldeckels zugeführt wird, freigegeben, bevor erneut eine Kraft zugeführt auf den Metalldeckel aufgebracht wird, die ausgehend von einem Wert, der niedriger als die während des Bördelvorgangs aufgebrachte Kraft ist, graduell bis hin zu einem Wert ansteigt, der höher als die während des Befestigungsvorgangs aufgebrachte Kraft ist. Während des Ansteigens der Kraft wird schließlich eine Kraft in dem Moment gemessen, in dem eine Abwärtsverschiebung in der Höhenlage der oberen Oberfläche des Metalldeckels detektiert wird. Diese Kraft wird nach Beendigung des Befestigungsvorgangs als Dichtungskraft bestimmt. Schließlich wird die Dichtungskraft mit einer einen ordnungsgemäßen Verschluss repräsentierenden, vordefinierten Kraft verglichen, so dass bei einer Abweichung zwischen der Dichtungskraft und der vordefinierten Kraft das Produkt als defekt eingestuft und ausgesondert wird.

Des Weiteren ist beispielsweise aus der DE 196 14 475 A1 ein Verfahren zum Prüfen der Dichtheit eines Verschlusses von pharmazeutischen Kleinbehältern bekannt. Darin ist vorgesehen, durch senkrechtes Verpressen des Verschlusses das im Verschluss erzeugte Dichtungskraftprofil zu messen und mit einem vorgegebenen Profil zu vergleichen. Bei Übereinstimmung des Messprofils mit dem vorgegebenen Profil wird der geprüfte Verschluss als ordnungsgemäß bewertet - das geprüfte Behältnis kann zur Auslieferung freigegeben werden. Bei Abweichungen zwischen den Profilen wird der Verschluss als mangelhaft eingestuft - das geprüfte Behältnis wird folglich ausgeschieden.

Des Weiteren sind beispielsweise aus der US 4 511 044 A eine Vorrichtung, ein System und ein Verfahren zur Prüfung der Dichtheit von verschlossenen Behältnissen bekannt.

Des Weiteren sind beispielsweise aus der US 4 315 427 A eine Vorrichtung, ein Verfahren und ein System zur Bestimmung der Dichtigkeit von verschlossenen Behältnissen bekannt.

Weiteren Stand der Technik bildet Mathaes R, Mahler HC, Buettiker JP, Roehl H, Lam P, Brown H, Luemkemann J, Adler M, Huwyler J, Streubel A, Mohl S.: "The pharmaceutical vial capping process: Container closure systems, capping equipment, regulatory framework, and seal quality tests", Eur J Pharm Biopharm. 2016 Feb; Bd. 99, S. 54-64; doi: 10.1016/j.ejpb.2015.11.016; Epub 2015 Nov 30. PMID: 26654992.

Den aus der DE 10 2005 023 067 A1 und der DE 196 14 475 A1 bekannten Verfahren ist gemeinsam, dass zur Beurteilung der Stopfenverpressung in erster Linie die Dichtungskraft ermittelt wird, mit welcher der Randflansch des Stopfens auf dem Mündungsrand des Behältnisses aufliegt. Wie aus der DE 10 2005 023 067 A1 hervorgeht, wird zur Beurteilung der Dichtheit des Verschlusses im Zustand des fertig verschlossenen Behältnisses die Verschlusskappe erneut mit einer Kraft beaufschlagt, so dass die gebördelten Flanken der Verschlusskappe von dem unteren Flaschenhals abheben.

Diverse weitere Einflussgrößen, die sich nachteilig auf die Beurteilung der Qualität des Verschlusses auswirken können, werden mangels Berücksichtigung des Zustands vor der Bördelung völlig außer Acht gelassen. So können beispielsweise ein unzureichender Stopfensitz sowie durch abweichende Fertigungstoleranzen von Stopfen, Bördelkappe und/oder Behältnis bedingte Einflüsse unerkannt bleiben, da derartige Einflüsse durch das bloße Betrachten der Dichtungskraft im Anschluss an das Bördeln nicht nachgewiesen werden können. Dies kann zu einer Abnahme der Verschlussqualität und schließlich zu Fehlbeurteilungen hinsichtlich der Verschlusssicherheit des Dichtungselements führen. Ferner ist die Aufzeichnung ganzer Dichtungskraftprofile und deren Vergleich mit vorgegebenen Kraftprofilen zur Beurteilung der Dichtheit eines Bördelverschlusses mit hoher Rechenleistung verknüpft.

Darüber hinaus verfügen bekannte Vorrichtungen zur Beurteilung von Verschlüssen der eingangs erwähnten Art, insbesondere von Bördelverschlüssen, in der Regel über mehrere Antriebseinheiten und sind mit einer Vielzahl von mechanischen, hydraulischen und/oder messtechnischen Komponenten ausgestattet, die meist mit einem komplexen Aufbau sowie einem hohen Energiebedarf einhergehen.

Vor diesem Hintergrund ist es eine Aufgabe der vorliegenden Erfindung, ein verbessertes Verfahren zum Prüfen der Dichtheit eines Verschlusses eines Behältnisses bereitzustellen.

Des Weiteren ist es eine Aufgabe der vorliegenden Erfindung, eine verbesserte Vorrichtung zum Prüfen der Dichtheit eines Verschlusses eines Behältnisses bereitzustellen.

Gemäß einem ersten Aspekt der Erfindung wird daher ein Verfahren zum Prüfen der Dichtheit eines Verschlusses eines Behältnisses, insbesondere eines pharmazeutischen oder kosmetischen Behältnisses, vorgeschlagen, der eine Verschlusskappe zum Verschließen des Behältnisses und ein elastisches Dichtungselement, das zwischen der Verschlusskappe und einem Mündungsrand des Behältnisses angeordnet ist, aufweist. Das Verfahren weist die folgenden Schritte auf:
- Ausüben einer ersten Prüfkraft auf das elastische Dichtungselement, um eine Kompression des elastischen Dichtungselements zu bewirken;
- Messen eines ersten Endlagenwerts, der eine aus der ersten Prüfkraft resultierende Hubposition des elastischen Dichtungselements angibt;
- Ausüben einer Bördelvorspannkraft auf das elastische Dichtungselement, wodurch das elastische Dichtungselement gegen den Mündungsrand des Behältnisses gedrückt wird, und Bördeln der Verschlusskappe;
- Ausüben einer zweiten Prüfkraft auf das durch die gebördelte Verschlusskappe vorgespannte elastische Dichtungselement; und
- Messen eines zweiten Endlagenwerts, der eine aus der zweiten Prüfkraft resultierende Hubposition des vorgespannten elastischen Dichtungselements angibt;
- Ermitteln eines Vergleichswerts basierend auf dem ersten Endlagenwert und dem zweiten Endlagenwert; und
- Beurteilen der Dichtheit des Verschlusses durch Vergleichen des Vergleichswerts mit einem vordefinierten Schwellenwert.

Unter dem Begriff "elastisches Dichtungselement" wird vorliegend ein elastischer bzw. nachgiebiger Stopfen, z.B. ein Gummistopfen, eine elastische bzw. nachgiebige Gummischeibe oder ein elastischer bzw. nachgiebiger Dichtungsring, z.B. O-Ring, zum Verschließen von vorzugsweise pharmazeutischen oder kosmetischen Behältnissen verstanden.

Die Ausübung der ersten Prüfkraft, der Bördelvorspannkraft und der zweiten Prüfkraft erfolgt dabei vorzugsweise entlang einer zu einer Längsachse des Behältnisses parallel verlaufenden Achse. Die Kompression des elastischen Dichtungselements wird durch eine Relativbewegung zwischen der Verschlusskappe und dem Behältnis unter Krafteinwirkung hervorgerufen.

Erfindungsgemäß wird bereits vor dem eigentlichen Bördelvorgang, welcher mit dem Ausüben der Bördelvorspannkraft eingeleitet wird, die erste Prüfkraft auf das elastische Dichtungselement ausgeübt und ein dazugehöriger, eine Hubposition des elastischen Dichtungselements repräsentierender erster Endlagenwert ermittelt. Die Verschlusskappe, die vorzugsweise aus Aluminium besteht, übergreift bei angelegter Bördelvorspannkraft das elastische Dichtungselement; ihr freies Ende wird dabei um einen die Mündung des Behältnisses umgebenden Flansch durch Bördeln plastisch verformt. Zum Bördeln wird das elastische Dichtungselement gegen den Mündungsrand des Behältnisses gepresst, wobei der Randflansch des elastischen Dichtungselement derart komprimiert wird, dass nach Fertigstellung der Bördelung die Verschlusskappe den unter Druckspannung stehenden Randflansch des elastischen Dichtungselements mit einer gewissen Kraft gegen den Mündungsrand des Behältnisses vorspannt. Anschließend wird die zweite Prüfkraft auf das elastische Dichtungselement ausgeübt und ein dazugehöriger, eine Hubposition des elastischen Dichtungselements repräsentierender zweiter Endlagenwert ermittelt.

Ein solcher erster oder zweiter Endlagenwert kann beispielsweise repräsentativ sein für eine Hubposition einer beweglichen Komponente einer Prüfvorrichtung zum Prüfen der Dichtheit des Verschlusses (z.B. eine Hubposition eines als Drehteller ausgebildeten Prüfblocks, eine Hubposition einer beweglichen Antriebsachse eines Hub-Dreh-Motors) oder für einen Abwärtshub der Bördelkappe infolge der auf die Anordnung aus Behälter, elastischem Dichtungselement und Bördelkappe ausgeübten Prüfkraft.

Ein Vorteil des erfindungsgemäßen Verfahrens besteht darin, dass zur Beurteilung der Dichtheit des Verschlusses mehr Störfaktoren berücksichtigt werden, die die Qualität des Verschlusses beeinträchtigen können. Ein weiterer Vorteil besteht in der dem Verfahren zugrundeliegenden "Zweipunktmessung", nach der zur Beurteilung der Dichtheit des Verschlusses lediglich zwei Zustände berücksichtigt werden, nämlich der erste Endlagenwert und der zweite Endlagenwert. Auf diese Weise wird ein vergleichsweise weniger komplexes Messverfahren geschaffen, das zur Beurteilung der Bördelqualität nicht auf ganze Kraftverlaufsprofile angewiesen ist. Der Schritt des Messens des ersten und/oder des zweiten Endlagenwerts bzw. der Schritt des Ermittelns eines Vergleichswerts ist dabei nicht auf ein "punktuelles Abgreifen" des jeweiligen Hubpositionswerts beschränkt, sondern kann auch unter Berücksichtigung einer Gruppe von Hubpositionswerten erfolgen, aus denen beispielsweise ein die entsprechende Hubposition angebender Endlagenwert, insbesondere durch Mittelwertbildung, ermittelt werden kann.

Gemäß einem zweiten Aspekt der Erfindung wird eine Vorrichtung zur Prüfung der Dichtheit eines Verschlusses eines Behältnisses, insbesondere eines pharmazeutischen oder kosmetischen Behältnisses, vorgeschlagen, der eine Verschlusskappe zum Verschließen des Behältnisses und ein elastisches Dichtungselement, das zwischen der Verschlusskappe und einem Mündungsrand des Behältnisses angeordnet ist, aufweist. Die Vorrichtung weist einen relativ gegen den Verschluss des Behältnisses bewegbaren Drehteller zum Ausüben einer Druckkraft auf das elastische Dichtungselement auf, um eine Kompression des Dichtungselements zu bewirken. Der Drehteller ist mit einer axial verschiebbaren Antriebswelle einer Antriebseinheit verbunden und ist dazu ausgebildet, mit dem daran gekoppelten Behältnis in Drehung versetzt zu werden. Des Weiteren weist die Vorrichtung eine Bördeleinrichtung zum Bördeln der Verschlusskappe, eine Steuereinheit zum Steuern der Antriebseinheit und einen Positionsgeber zum Bereitstellen eines eine Hubposition des Drehtellers repräsentierenden Werts auf; wobei die Vorrichtung des Weiteren dazu eingerichtet ist, die folgenden Schritte auszuführen: Ausüben, mittels der Antriebseinheit, einer ersten Prüfkraft auf das elastische Dichtungselement, um eine Kompression des elastischen Dichtungselements zu bewirken; Messen, mittels des Positionsgebers, eines ersten Endlagenwerts, der eine aus der ersten Prüfkraft resultierende Hubposition des elastischen Dichtungselements angibt; Ausüben, mittels der Antriebseinheit, einer Bördelvorspannkraft auf das elastische Dichtungselement, wodurch das elastische Dichtungselement gegen den Mündungsrand des Behältnisses gedrückt wird, und Bördeln, mittels der Bördeleinrichtung, der Verschlusskappe; Ausüben, mittels der Antriebseinheit, einer zweiten Prüfkraft auf das durch die gebördelte Verschlusskappe vorgespannte elastische Dichtungselement; Messen, mittels des Positionsgebers, eines zweiten Endlagenwerts, der eine aus der zweiten Prüfkraft resultierende Hubposition des vorgespannten elastischen Dichtungselements angibt; Ermitteln, mittels einer Vergleichseinheit, eines Vergleichswerts basierend auf dem ersten Endlagenwert und dem zweiten Endlagenwert; und Beurteilen, mittels der Vergleichseinheit, der Dichtheit des Verschlusses durch Vergleichen des Vergleichswerts mit einem vordefinierten Schwellenwert.

Erfindungsgemäß weist die Vorrichtung zum Prüfen der Dichtheit des Verschlusses einen als Drehteller ausgebildeten Druckblock auf. Ein Vorteil dieser Ausgestaltung ist, dass im Vergleich zu herkömmlichen Prüfvorrichtungen, weniger Komponenten und bewegliche Bauteile erforderlich sind. Während herkömmliche Prüfvorrichtungen mit integrierter Bördeleinrichtung darauf ausgelegt sind, den das Behältnis ausnehmenden Tisch auf einer mit einem Drehmotor verbundenen Drehwelle zu befestigen, um mit dem aufgenommenen Behältnis gedreht zu werden, und oberhalb des Tisches einen separaten, z.B. pneumatisch betätigten Druckblock vorzusehen, sieht die erfindungsgemäße Vorrichtung einen Drehteller vor, der dazu ausgebildet ist, Drehbewegungen, Hubbewegungen und kombinierte Dreh- und Hubbewegungen auszuführen.

Unter dem Begriff "Positionsgeber" wird vorliegend ein zur Ermittlung eines eine Hubposition einer beweglichen Komponente, z.B. eine Hubposition des Drehtellers, eine Hubposition der Hub-Dreh-Achse der Antriebseinheit, oder eines eine Hubposition der Bördelkappe repräsentierenden Werts verstanden. Beispielsweise kann der erfindungsgemäße Positionsgeber ein Absolutwertgeber, ein Inkrementalgeber oder ein optischer Distanzsensor, z.B. optischer Reflexions-Distanzsensor, optischer Näherungsschalter, etc., sein.

Auf diese Weise kann die Vorrichtung dazu ausgestaltet und eingerichtet sein, das Verfahren gemäß dem ersten Aspekt oder einer seiner Ausgestaltungen auszuführen.

Die Steuerungseinheit und die Vergleichseinheit können beispielsweise dieselbe Computereinheit bzw. Verarbeitungseinheit sein. Auf dieser können Prozesse softwareimplementiert ausgeführt werden, die die entsprechenden Schritte umsetzen. Auf diese Weise kann ein vollständig automatisierter Prüfprozess während des Bördelns implementiert sein. Insbesondere kann vorgesehen sein, dass die Computereinheit, welche die Steuereinheit und die Verarbeitungseinheit und optional eine Speichereinheit aufweist, dazu ausgebildet ist, ein Computerprogrammprodukt auszuführen, das Befehle enthält, die die Rechnereinheit oder die Verarbeitungseinheit zur Ausführung dieser Schritte veranlassen.

Ein Vorteil der erfindungsgemäßen Vorrichtung ist darin zu sehen, dass die zur Herstellung der Bördelung benötigte Drehung des Behältnisses relativ zu einem Befestigungsmittel der Bördeleinrichtung und die zur Kompression des elastischen Dichtungselements erforderliche Ausübung der entsprechenden Druckkraft ausschließlich durch den angetriebenen Drehteller realisiert werden. Dies ermöglicht eine kompakte und einfache Bauweise der Vorrichtung. Die Vorrichtung kann als Einzelstation oder in einem mehrstelligen Aufbau zur gleichzeitigen Verarbeitung einer Mehrzahl von Behältnissen vorliegen. Ferner kann eine Anordnung der Vorrichtung in einem Rotor vorgesehen sein, beispielsweise als Teil einer schienenartigen Verschlussstation, die zum Tragen und Verarbeiten mehrerer Behältnisse ausgebildet ist.

Die eingangs gestellte Aufgabe wird daher vollumfänglich gelöst.

In einer ersten Ausgestaltung des Verfahrens kann vorgesehen sein, dass die erste Prüfkraft gleich der zweiten Prüfkraft ist.

Ein Vorteil dieser Ausgestaltung ist, dass zur Beurteilung der Dichtheit des Verschlusses ein vereinfachtes Verfahren bereitgestellt wird, da vor und nach dem Bördeln stets die gleiche Prüfkraft auf das elastische Dichtelement ausgeübt wird, anstelle von unterschiedlichen Prüfkräften. Ein weiterer Vorteil dieser Ausgestaltung ist, dass sich für den der ersten Prüfkraft zugeordneten ersten Endlagenwert und/oder den der zweiten Prüfkraft zugeordneten zweiten Endlagenwert ein begrenzter Hublagebereich einstellt, so dass eine präzisere Beurteilung der Verschlusssicherheit unter Berücksichtigung weiterer Fehlerquellen ermöglicht wird. Alternativ kann vorgesehen sein, dass die erste Prüfkraft gleich der Bördelvorspannkraft ist.

In einer weiteren Ausgestaltung des Verfahrens kann vorgesehen sein, dass die Bördelvorspannkraft größer als die erste Prüfkraft und/oder die zweite Prüfkraft ist.

Durch diese Ausgestaltung können ein verbessertes Messverfahren und eine effizientere Fehlererkennung realisiert werden. Der Betrag der ersten Prüfkraft liegt vorzugsweise in einem Bereich, der ausreichend ist, um das Behältnis, das elastische Dichtungselement und die Verschlusskappe vor dem Bördelvorgang auszurichten und aneinanderzulegen. Insbesondere kann der Betrag der ersten und/oder der zweiten Prüfkraft derart gewählt sein, dass sich das mit der jeweiligen Prüfkraft beaufschlagte flexible Dichtungselement nicht oder nur geringfügig komprimiert. Dadurch ergibt sich bei der Beurteilung der Dichtheit des Verschlusses durch Vergleichen des Vergleichswerts mit einem vordefinierten Schwellenwert, beispielsweise anhand einer Differenz zwischen dem ersten Endlagenwert und dem zweiten Endlagenwert, auch ein maximaler Differenzwert, was der Messgenauigkeit zu Gute kommt. Die erste Prüfkraft und/oder die zweite Prüfkraft können vorzugsweise jeweils zwischen 5 % und 60 %, z.B. 10 %, der Bördelvorspannkraft betragen. Der Betrag der jeweiligen Prüfkraft ist jedoch nicht auf diesen Wertebereich beschränkt und kann beispielsweise auch außerhalb dieses Wertebereichs liegen.

Erfolgt beispielsweise der Schritt des Ausübens der ersten Prüfkraft auf das elastische Dichtungselement mit einer Kraft, die kleiner als die Bördelvorspannkraft ist, stellt sich für das mit der Bördelvorspannkraft beaufschlagte elastische Dichtungselement eine Hubposition ein, die betragsmäßig größer ist als die aus der ersten Prüfkraft resultierende Hubposition. Infolge einer nicht ordnungsgemäß durchgeführten Bördelung kann es passieren, dass das vorgespannte elastische Dichtungselement sich ausdehnt und die Verschlusskappe relativ zu dem Behältnis verschiebt. Wird nun die zweite Prüfkraft angelegt, die vorzugsweise kleiner als die Bördelvorspannkraft ist, kann ein Zurückführen des elastischen Dichtungselementes durch das Aufbringen der zweiten Prüfkraft hin zu einem Zustand, in dem das elastische Dichtungselement in seine vorherige, insbesondere gebördelte Hubposition zurückgeführt ist, vermieden werden. Eine derartige Rückführung in die der Bördelvorspannkraft entsprechende Hubposition, oder über diese hinaus, würde es erheblich erschweren, eine fehlerhafte Bördelung zu erkennen, da die daraus resultierende Verschiebung der Verschlusskappe relativ zu dem Behältnis kompensiert würde.

Optional kann vorgesehen sein, dass zum einen die Bördelvorspannkraft größer als die erste Prüfkraft und die zweite Prüfkraft ist, und zum anderen die erste Prüfkraft gleich der zweiten Prüfkraft ist. Auf diese Weise kann die Fehlererkennung weiter optimiert werden. Ist die erste Prüfkraft gleich der zweiten Prüfkraft, jedoch kleiner als die Bördelvorspannkraft, ergibt sich beispielsweise bei nicht ordnungsgemäß durchgeführter Bördelung für den zweiten Endlagenwert eine Hubposition, die zwischen der aus der ersten Prüfkraft resultierenden Hubposition und einer der Bördelvorspannkraft entsprechenden Hubposition liegt.

In einer weiteren Ausgestaltung des Verfahrens kann vorgesehen sein, dass ein Übergang zwischen dem Ausüben der ersten Prüfkraft, dem Ausüben der Bördelvorspannkraft und dem Ausüben der zweiten Prüfkraft jeweils kontinuierlich erfolgt, ohne die entsprechende Druckkraft auf das elastische Dichtelement vollständig zu lösen.

Auf diese Weise kann das Prüfverfahren gegenüber einer Konfiguration, die nach jedem Schritt des Ausübens der entsprechenden Druckkraft ein Zurücksetzen in eine Ruhelage vorsieht, effizienter durchgeführt werden.

In einer weiteren Ausgestaltung des Verfahrens kann vorgesehen sein, dass zwischen dem Ausüben der ersten Prüfkraft und dem Ausüben der zweiten Prüfkraft kontinuierlich Hubpositionen des elastischen Dichtungselements aufgezeichnet und gespeichert werden.

Mit anderen Worten wird zwischen der Ausübung der ersten Prüfkraft über die Ausführung der Bördelkraft bis hin zur Ausübung der zweiten Prüfkraft Hubpositionsprofil bzw. ein Hubpositionsverlauf, insbesondere ein kontinuierlicher Hubpositionsverlauf aufgezeichnet und gespeichert. Derartige Hubpositionsprofile können beispielsweise bei der Beurteilung der Bördelqualität berücksichtigt werden. Insbesondere kann vorgesehen sein, dass zur Beurteilung der Verschlussqualität ein in Zusammenhang mit einem zu prüfenden Verschluss ermittelter Hubpositionsverlauf mit einem vordefinierten Hubpositionsverlauf eines ordnungsgemäßen Verschlusses verglichen wird, so dass bei einer Abweichung des ermittelten Hubpositionsverlaufs von dem vordefinierten Hubpositionsverlauf das Behältnis mit dem geprüften Verschluss als nicht ordnungsgemäß eingestuft wird.

In einer weiteren Ausgestaltung des Verfahrens kann vorgesehen sein, dass der ermittelte Vergleichswert eine Differenz zwischen dem ersten Endlagenwert und dem zweiten Endlagenwert ist.

Mit anderen Worten erfolgt die Beurteilung der Dichtheit des Verschlusses durch den Vergleich eines Vergleichswertes, der eine Differenz zwischen dem ersten Endlagenwert und dem zweiten Endlagenwert darstellt, mit einem vordefinierten Schwellenwert. Der Vergleich eines solchen Differenzwertes unter Berücksichtigung von lediglich zwei Endlagenwerten, nämlich einem vor dem Bördeln und einem nach dem Bördeln, ermöglicht eine effiziente Prüfung der Dichtheit des Verschlusses, insbesondere im Hinblick auf die erforderliche Rechenleistung und Verarbeitungsgeschwindigkeit. Vorzugsweise wird zur Beurteilung der Dichtheit des Verschlusses ein Betrag der Differenz zwischen dem ersten Endlagenwert und dem zweiten Endlagenwert gebildet.

Die erfindungsgemäße Beurteilung der Dichtheit des Verschlusses anhand einer derartigen Differenzbildung zeichnet sich im Vergleich zu einem Absolutwertvergleich, bei dem der erste Endlagenwert und der zweite Endlagenwert jeweils direkt mit einem entsprechenden vordefinierten Endlagenwert eines ordnungsgemäßen Verschlusses verglichen wird, dadurch aus, dass ein Absolutvergleich in der Regel mit mehr Rechenaufwand verbunden ist und aufgrund von Fertigungstoleranzen der Verschlusskappe, des elastischen Dichtungselements und/oder des Behälters zu ungenaueren Beurteilungen führen kann.

In einer weiteren Ausgestaltung des Verfahrens kann vorgesehen sein, dass der ermittelte Vergleichswert ein Quotient zwischen dem ersten Endlagenwert und dem zweiten Endlagenwert ist.

Mit anderen Worten erfolgt die Beurteilung der Dichtheit des Verschlusses durch den Vergleich eines Vergleichswertes, der einen Quotienten zwischen dem ersten Endlagenwert und dem zweiten Endlagenwert darstellt, mit einem vordefinierten Schwellenwert. Der Vergleich eines solchen Quotienten unter Berücksichtigung von lediglich zwei Endlagenwerten, nämlich einem vor dem Bördeln und einem nach dem Bördeln, ermöglicht eine effiziente Prüfung der Dichtheit des Verschlusses, insbesondere im Hinblick auf die erforderliche Rechenleistung und Verarbeitungsgeschwindigkeit.

In einer weiteren Ausgestaltung des Verfahrens kann vorgesehen sein, dass wenn der ermittelte Vergleichswert von dem einen ordnungsgemäßen Verschluss repräsentierenden vordefinierten Schwellenwert abweicht, der zu prüfende Verschluss als nicht ordnungsgemäß eingestuft wird.

Der vordefinierte Schwellenwert ist vorzugsweise ein zur Beurteilung der Dichtheit des zu prüfenden Verschlusses geeigneter Wert. Beispielsweise kann der vordefinierte Schellenwert eine Endlagendifferenz oder einen Endlagenquotienten eines als ordnungsgemäß eingestuften Referenzverschlusses darstellen. Der vordefinierte Schwellenwert kann beispielsweise basierend auf einem ordnungsgemäß abdichtenden Verschluss eines optimalen Behältnisses oder basierend auf einem eine Vielzahl von ordnungsgemäß abgedichteten Verschlüssen repräsentierenden Mittelwert ermittelt werden.

In einer weiteren Ausgestaltung des Verfahrens kann vorgesehen sein, dass der vordefinierte Schwellenwert ein Toleranzband von vordefinierten Endlagendifferenzen oder vordefinierten Endlagenquotienten ordnungsgemäßer Verschlüsse aufweist, wobei der zu prüfende Verschluss als ordnungsgemäß eingestuft wird, wenn der ermittelte Vergleichswert innerhalb des Toleranzbandes liegt.

Mit anderen Worten wird anhand von Grenzschwellwerten ein Toleranzband von Schwellwerten von ordnungsgemäßen Verschlüssen bestimmt. Die Beurteilung der Dichtheit eines zu überprüfender Verschluss erfolgt vorzugsweise derart, dass geprüft wird, ob der ermittelte Vergleichswert innerhalb dieses Toleranzbandes liegt. Die Grenzwerte können beispielsweise Werte sein, die die Ober- und Untergrenze eines Verschlusses darstellen, der gerade noch hinreichend abdichtet.

In einer weiteren Ausgestaltung des Verfahrens kann vorgesehen sein, dass zur Bewertung der Dichtheit des Verschlusses zusätzlich zu dem Schritt des Vergleichens des ermittelten Vergleichswertes mit dem vordefinierten Schwellenwert der zweite Endlagenwert, der die aus der zweiten Prüfkraft resultierende Hubposition des vorgespannten elastischen Dichtungselements angibt, mit einem vordefinierten Endlagenwert eines ordnungsgemäßen Verschlusses verglichen wird, wobei der vordefinierte Endlagenwert des ordnungsgemäßen Verschlusses eine Hubposition eines mit der zweiten Prüfkraft beaufschlagten elastischen Dichtungselements des ordnungsgemäßen Verschlusses angibt.

Durch den zusätzlichen Vergleich des dem zu prüfenden Verschluss entsprechenden zweiten Endlagenwerts mit einem vordefinierten Endlagenwert eines ordnungsgemäßen Verschlusses wird eine präzisere Beurteilung der Verschlussdichtheit ermöglicht. Zudem ist auf diese Weise eine präzise Zuordnung eines aufgetretenen Fehlers zu dem Zustand vor dem Bördeln oder zu dem Zustand nach dem Bördeln erlaubt. Die Ermittlung eines Vergleichswertes auf der Basis einer Differenz oder eines Quotienten zeigt zwar an, dass die Dichtheit des Verschlusses nicht ordnungsgemäß ist, gibt aber keine präzise Auskunft darüber, ob die Fehlerursache vor dem Bördelvorgang, z.B. durch unsachgemäßen Sitz des Stopfens, oder nach dem Bördelvorgang, z.B. durch unsachgemäße Bördelung, liegt.

In einer weiteren Ausgestaltung des Verfahrens kann vorgesehen sein, dass zur Bewertung der Dichtheit des Verschlusses zusätzlich zu dem Schritt des Vergleichens des ermittelten Vergleichswertes mit dem vordefinierten Schwellenwert der erste Endlagenwert, der die aus der ersten Prüfkraft resultierende Hubposition des elastischen Dichtungselements angibt, mit einem vordefinierten Endlagenwert eines ordnungsgemäßen Verschlusses verglichen wird, wobei der vordefinierte Endlagenwert des ordnungsgemäßen Verschlusses eine Hubposition eines mit der ersten Prüfkraft beaufschlagten elastischen Dichtungselements des ordnungsgemäßen Verschlusses angibt.

Durch den zusätzlichen Vergleich des dem zu prüfenden Verschluss entsprechenden ersten Endlagenwerts mit einem vordefinierten Endlagenwert eines ordnungsgemäßen Verschlusses wird eine präzisere Beurteilung der Verschlussdichtheit ermöglicht. Zudem ist auf diese Weise eine präzise Zuordnung eines aufgetretenen Fehlers zu dem Zustand vor dem Bördeln oder zu dem Zustand nach dem Bördeln erlaubt. Zur weiteren Verbesserung der Beurteilungsqualität kann optional vorgesehen sein, dass zusätzlich zu dem Schritt des Vergleichens des ermittelten Vergleichswertes mit dem vordefinierten Schwellenwert der erste Endlagenwert mit einem vordefinierten Endlagenwert und der zweite Endlagenwert mit einem weiteren vordefinierten Endlagenwert eines ordnungsgemäßen Verschlusses verglichen wird.

In einer weiteren Ausgestaltung des Verfahrens kann vorgesehen sein, dass zumindest einer der Schritte des Messens des aus der ersten Prüfkraft resultierenden ersten Endlagenwerts oder des Messens des aus der zweiten Prüfkraft resultierenden zweiten Endlagenwerts basierend auf einer optischen Entfernungsmessung und/oder einer magnetischen Längenmessung erfolgt.

Eine derartige optische Entfernungsmessung kann beispielsweise anhand einer Laufzeitmessung, einer Phasenlagemessung oder einer Triangulation von Licht, insbesondere Laser, erfolgen. Bei der Laufzeitmessung wird beispielsweise ein Lichtpuls ausgesandt und eine Pulslaufzeit gemessen. Die Pulslaufzeit ist die Laufzeit, die der Lichtstrahl benötigt, um von einer Strahlquelle zu einem Reflektor, z.B. einem Retroreflektor, und wieder zurück zur Strahlquelle zu laufen. Durch Messen dieser Laufzeit lässt sich schließlich über die Lichtgeschwindigkeit eine Distanz zwischen Strahlquelle und Objekt ermitteln. Diese ermittelte Distanz kann beispielsweise einen eine Hubposition des elastischen Dichtungselements repräsentierenden Wert angeben. Bei der optischen Triangulation hingegen wird vorzugsweise ein Laserstrahl auf das Messobjekt fokussiert und mit einem Sensorelement, z.B. einer Kamera, einer ortsauflösenden Photodiode oder einer CCD-Zeile, beobachtet. Ändert sich die Entfernung des Messobjektes von dem Sensorelement, ändert sich auch der Winkel, unter dem der Lichtpunkt beobachtet wird und damit die Position seines Abbildes auf dem Empfänger, z.B. dem Fotoempfänger. Aus der Positionsänderung kann mit Hilfe von mathematischen, insbesondere trigonometrischen Zusammenhängen die Entfernung des Objektes von dem Laserprojektor berechnet werden.

Eine Auslenkung bzw. Kompression des elastischen Dichtungselements infolge einer Druckkraftbeaufschlagung äußert sich unmittelbar in einer Hubpositionsänderung einer die Relativbewegung zwischen der Verschlusskappe und dem Behältnis verursachenden Komponente, z.B. in einer Hubpositionsänderung eines Prüfblocks zum Ausüben einer Druckkraft auf das elastische Dichtungselement, einer den Prüfblock antreibenden Antriebsachse, oder in einer Hubpositionsänderung des druckbeaufschlagten Behältnisses oder der druckbeaufschlagten Verschlusskappe selbst. Durch optisches Messen einer Entfernung zwischen einem optischen Sensor einer Entfernungsmessvorrichtung und einer der vorgenannten Komponenten können demnach unterschiedliche Endlagenwerte ermittelt werden. Optional kann die Ermittlung des ersten und/oder des zweiten Endlagenwerts auch anhand eines magnetischen Wegmesssystems erfolgen. Magnetische Messsysteme haben gegenüber optischen Geräten den Vorteil, dass sie gegen Verschmutzung, z.B. durch Öl oder andere Flüssigkeiten, weitgehend unempfindlich sind. Beispielsweise kann die Messung des jeweiligen Endlagenwerts mit Hilfe von zumindest einem magnetischen Sensor erfolgen. Dabei kann es sich z.B. um einen magnetoresistiven Sensor, einen Hallsensor oder dergleichen handeln.

In einer weiteren Ausgestaltung des Verfahrens kann vorgesehen sein, dass das Ausüben der ersten Prüfkraft und das Ausüben der zweiten Prüfkraft jeweils durch eine Antriebseinheit, insbesondere einen Hub-Dreh-Motor, betätigt wird, wobei zumindest einer der Schritte des Messens des ersten Endlagenwerts oder des Messens des zweiten Endlagenwerts basierend auf einer Positionserfassung in der Antriebseinheit erfolgt..

Im Vergleich zu herkömmlichen Prüfverfahren, bei denen eine Vielzahl von Antriebseinheiten und zusätzliche Messeinrichtungen erforderlich sind, wird somit die Beurteilung der Dichtheit des Verschlusses durch die Verwendung von Kennwerten der Antriebseinheit vereinfacht. Durch die bevorzugte Verwendung eines Hub-Dreh-Motors, mit dem beliebig kombinierbare Linear- und Rotationsbewegungen realisiert werden, kann ferner ein vereinfachtes Prüfverfahren durch Ausnutzung von Synergieeffekten realisiert werden.

In einer ersten Ausgestaltung der Vorrichtung kann vorgesehen sein, dass die Antriebswelle der Antriebseinheit drehbar ausgebildet ist.

Mit anderen Worten ist die Antriebswelle drehbar und axial verschiebbar ausgebildet. Auf diese Weise kann eine beliebig kombinierbare Linear- und Rotationsbewegung des mit dem Drehteller gekoppelten Behältnisses realisiert werden. Erfindungsgemäß kann mittels der mit der Antriebseinheit verbundenen Antriebswelle daher sowohl ein Verpressen des mit dem Verschluss versehenen Behältnisses als auch eine Rotation des Behältnisses für den Bördelvorgang realisiert werden. Dies ermöglicht wiederum eine kompakte und vereinfachte Bauweise der Vorrichtung.

Die Vorrichtung weist vorzugsweise eine Aufnahme zum lösbaren Aufnehmen eines Endabschnitts des Behältnisses oder der Verschlusskappe auf. Der Drehteller und die Aufnahme können beispielsweise an gegenüberliegenden Endabschnitten des die Verschlusskappe tragenden Behältnisses angeordnet sein. Vorzugsweise ist die Gegenaufnahme frei drehbar ausgebildet, um eine Drehung des Behältnisses während des Bördelvorgangs zu ermöglichen.

In einer weiteren Ausgestaltung der Vorrichtung kann vorgesehen sein, dass die Antriebseinheit ein Hub-Dreh-Motor ist.

Ein gattungsgemäßer Hub-Dreh-Motor ist beispielsweise aus der EP 0 482 321 A1 bekannt. Die Verwendung eines Hub-Dreh-Motors ermöglicht eine beliebig kombinierbare Linear- und Rotationsbewegung des Drehtellers. Auf diese Weise kann sowohl ein gegenseitiges Verpressen des Verschlusses und des Behältnisses als auch eine Rotation des Behältnisses für den Bördelvorgang realisiert werden. Dies ermöglicht wiederum eine kompakte und vereinfachte Bauweise der Vorrichtung.

In einer weiteren Ausgestaltung der Vorrichtung kann vorgesehen sein, dass der Positionsgeber ein Motorsensor ist, der dazu ausgebildet ist, den die Hubposition des Drehtellers repräsentierenden Wert zu ermitteln.

Beispielsweise kann der erfindungsgemäße Positionsgeber einen Absolutwertgeber oder einen Inkrementalgeber aufweisen.

Eines der Leistungsmerkmale eines Linearmotors bzw. eines Hub-Dreh-Motors ist die präzise Positionsregelung des Läufers, die eine genaue Erfassung der Läuferposition relativ zum Stator erfordert. Erfindungsgemäß ist nun vorgesehen, den Drehteller mittels des Läufers in rotatorische und/oder translatorische Bewegung zu versetzen. Die Bereitstellung des die Hubposition des Drehtellers repräsentierenden Werts erfolgt vorzugsweise basierend auf Positionsdaten des Läufers. Beispielsweise werden bei tubularen Linearmotoren und bei Hub-Dreh-Motoren die sich im Läufer befindenden Permanentmagnete nicht nur zum Antrieb, sondern auch als Informationsträger für die Positionserfassung verwendet. Dazu können sich beispielsweise im Stator des Motors zwei Magnetfeldsensoren, z.B. Hallsensoren, befinden, die in Längsrichtung voneinander beabstandet angeordnet sind. Die beiden Hallsensoren messen das in Längsrichtung periodische Magnetfeld und erzeugen bei einer linearen Verschiebung des Läufers relativ zum Stator, und damit zu den beiden Hallsensoren, phasenversetzte Signalverläufe, deren Auswertung, z.B. durch eine sog. "Sinus-Cosinus-Auswertung", eine exakte Positionsbestimmung ermöglicht.

In einer weiteren Ausgestaltung der Vorrichtung kann vorgesehen sein, dass der Positionsgeber ein optischer Sensor ist, der dazu ausgebildet ist, den die Hubposition des Drehtellers repräsentierenden Wert optisch zu ermitteln.

Auf diese Weise wird eine präzise Hubpositionserfassung ermöglicht.

Der optische Sensor kann beispielsweise einen optischen Reflexionslichttaster oder einen optischen Näherungsschalter aufweisen. Optische Reflexionslichttaster weisen in der Regel eine Sende- und eine Empfangseinheit aus und nutzen das Messobjekt im Erfassungsfeld des Sensors als Reflektor. Das Messobjekt reflektiert dabei den von der Sendeeinheit ausgesandten Lichtstrahl. Eine derartige optische Entfernungsmessung kann beispielsweise anhand einer Laufzeitmessung, einer Phasenlagemessung oder einer Triangulation von Licht, insbesondere Laser, erfolgen.

In einer weiteren Ausgestaltung der Vorrichtung kann vorgesehen sein, dass der Positionsgeber ein Motorsensor ist, der dazu ausgebildet ist, den die Hubposition des Drehtellers repräsentierenden Wert zu ermitteln, und dass die Vorrichtung einen weiteren Positionsgeber aufweist, wobei der weitere Positionsgeber ein optischer Reflexionssensor ist, der dazu ausgebildet ist, den die Hubposition des Drehtellers repräsentierenden Wert optisch zu ermitteln.

Mit anderen Worten wird zusätzlich zu dem Motorsensor ein optischer Sensor bereitgestellt. Dies ermöglicht eine zusätzliche Redundanz und eine hohe Messgenauigkeit.

In einer weiteren Ausgestaltung der Vorrichtung kann vorgesehen sein, dass die Bördeleinrichtung zumindest ein quer zu einer Längsachse des Behältnisses bewegbares Befestigungsmittel aufweist, das zwischen einer Position, in der das Befestigungsmittel gegen die Verschlusskappe gedrückt ist, um ein freies Ende der Verschlusskappe plastisch zu verformen, und einer Position, in der es von der Verschlusskappe beabstandet ist, bewegbar ist.

Die Bördeleinrichtung ermöglicht gemeinsam mit dem drehbar und höhenverstellbar ausgebildeten Drehteller eine kompakte Bauweise der Vorrichtung und ermöglicht ferner eine präzise Inprozesskontrolle der Verschlusssicherheit.

In einer weiteren Ausgestaltung der Vorrichtung kann vorgesehen sein, dass die Steuereinheit des Weiteren dazu ausgebildet ist, das Befestigungsmittel in Anlage mit der Bördelverschlusskappe zu bringen, während das Behältnis in Drehung versetzt ist.

Zum Zwecke des Bördelns wird das elastische Dichtungselement mit einer Bördelvorspannkraft belastet und infolgedessen komprimiert. Anschließend wird das Befestigungsmittel in die Position, in der es gegen die Verschlusskappe gedrückt ist, bewegt. Dabei muss zum einen sichergestellt sein, dass die Hubposition des Drehtellers mit dem daran gekoppelten Behältnis im Wesentlichen konstant bleibt, und zum anderen, dass das Behältnis für die Bördelung in Drehung versetzt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Des Weiteren können die für die Vorrichtung geschilderten Ausgestaltungen auch Ausgestaltungen des Verfahrens bilden und umgekehrt.

Ausführungsformen der Erfindung sind in der Zeichnung dargestellt und werden in der nachfolgenden Beschreibung näher erläutert. Es zeigen:
- Figur 1: eine schematische Ansicht einer Ausführungsform einer Vorrichtung zum Prüfen der Dichtheit eines Verschlusses,
- Figur 2: eine isometrische Ansicht einer Ausführungsform einer Vorrichtung zum Prüfen der Dichtheit eines Verschlusses,
- Figur 3: eine isometrische Ansicht einer Ausführungsform einer Vorrichtung zum Prüfen der Dichtheit eines Verschlusses,
- Figur 4: eine schematische Ansicht einer Ausführungsform eines Verfahrens zum Prüfen der Dichtheit eines Verschlusses,
- Figuren 5A-5C: einen schematischen Ablauf einer Ausführungsform eines Verfahrens zum Prüfen der Dichtheit eines Verschlusses,
- Figur 6: ein Kraft-Weg-Diagramm gemäß einer Ausführungsform eines Verfahrens zum Prüfen der Dichtheit eines Verschlusses, und
- Figur 7: ein Kraft-Weg-Diagramm gemäß einer Ausführungsform eines Verfahrens zum Prüfen der Dichtheit eines Verschlusses.

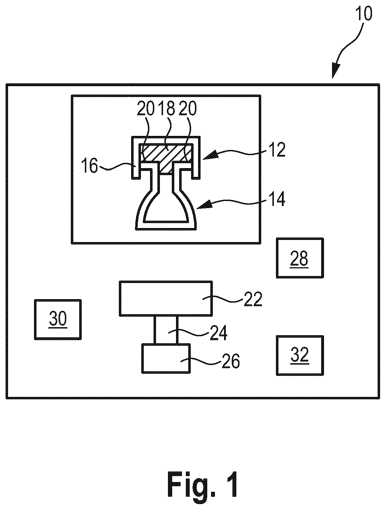

Die Figur 1 zeigt eine schematische Ansicht einer Ausführungsform einer Vorrichtung 10 zum Prüfen der Dichtheit eines Verschlusses 12 eines Behältnisses 14. Bei dem Behältnis 14 handelt es sich vorzugsweise um ein pharmazeutisches oder kosmetisches Behältnis, z.B. ein Vial, eine Karpule, ein Infusionsfläschchen oder dergleichen.

Der Verschluss 12 weist eine Verschlusskappe 16 und ein elastisches Dichtungselement 18, z.B. einen Stopfen, insbesondere Gummistopfen, eine Dichtungsscheibe, einen O-Ring oder dergleichen, auf. Das elastische Dichtungselement 18 ist dabei zwischen der Verschlusskappe 16 und einem Mündungsrand 20 des Behältnisses 14 angeordnet. Das in der Fig. 1 dargestellte elastische Dichtungselement 18 ist beispielhaft als ein in das Behältnis 14 eingetriebener Gummistopfen ausgeführt.

Des Weiteren weist die Vorrichtung 10 einen Drehteller 22 auf, der ausgebildet ist zum Ausüben einer Druckkraft auf das elastische Dichtungselement 18. Der Drehteller 22 ist mit einer Antriebswelle 24 einer Antriebseinheit 26 wirkverbunden. Auf diese Weise ist der Drehteller 22 durch die Antriebseinheit 26 betätigbar. Die Antriebseinheit 26 ist vorzugsweise dazu ausgebildet, eine Hubbewegung und/oder eine Rotationsbewegung der Antriebswelle 24, und damit des Drehtellers 22, durchzuführen. Des Weiteren weist die Vorrichtung 10 eine Bördeleinrichtung 28 zum Bördeln der Verschlusskappe 16 und eine Steuereinheit 30 zum Steuern der Antriebseinheit 26 auf. Der mit der Antriebswelle 24 verbundene Drehteller 22 ist vorzugsweise entlang einer nicht dargestellten Rotationsachse der Antriebswelle 24 bewegbar. Des Weiteren weist die Vorrichtung 10 einen Positionsgeber 32 auf. Der Positionsgeber 32 ist dazu ausgebildet, einen eine Hubposition des Drehtellers 22 repräsentierenden Wert bereitzustellen.

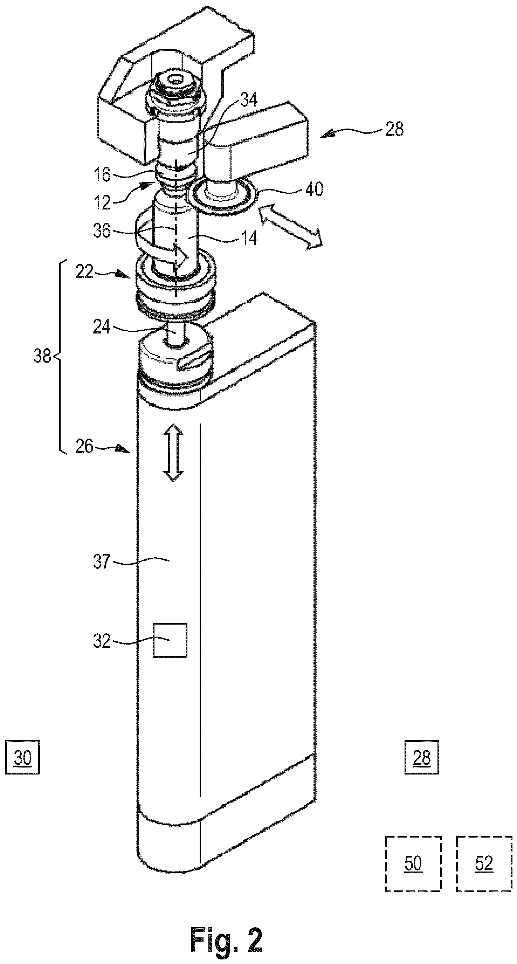

Die Figur 2 zeigt eine isometrische Ansicht einer Ausführungsform der Vorrichtung 10. Gleiche Elemente sind mit gleichen Bezugszeichen gekennzeichnet, im Folgenden wird lediglich auf die Unterschiede eingegangen.

In der gezeigten Ausführungsform der Vorrichtung 10 ist das mit dem Verschluss 12 versehene Behältnis 14 zwischen dem Drehteller 22 und einer Aufnahme 34 angeordnet. Die Aufnahme 34 ist vorzugsweise dazu ausgebildet, den Verschluss 12 des Behältnisses 14 frei drehbar aufzunehmen. Auf diese Weise kann der motorbetriebene, mit dem Behältnis 14 gekoppelte Drehteller 22 während eines Bördelvorgangs in Drehung versetzt werden.

Der Drehteller 22 ist hierbei unterhalb des Behältnisses 14 angeordnet, wohingegen die Aufnahme 34 oberhalb des Behältnisses 14 angeordnet ist. Alternativ kann vorgesehen sein, dass der Drehteller 22 oberhalb des Behältnisses 14 angeordnet ist und die Aufnahme 34 unterhalb des Behältnisses 14 angeordnet ist. In einer solchen alternativen Ausgestaltung ist das Behältnis 14 in der Aufnahme 34 frei drehbar aufgenommen und der Verschluss 12 mit dem Drehteller 22 gekoppelt.

Der Drehteller 22 ist über die Antriebswelle 24 mit der vorzugsweise als Hub-Dreh-Motor ausgebildeten Antriebseinheit 26 wirkverbunden. Die in der Figur 2 gezeigte Ausführungsform der Vorrichtung 10 sieht des Weiteren einen als Motorsensor ausgebildeten Positionsgeber 32 vor. Die Ermittlung des die Hubposition des Drehtellers 22 repräsentierenden Werts erfolgt dabei vorzugsweise basierend auf einer Positionserfassung der in einem Antriebsstrang 37 für die Hub- und Rotationsbewegung aufgenommenen Antriebswelle 24. Der Drehteller 22, die Antriebswelle 24 und die Antriebseinheit 26 bilden gemeinsam die Hubvorrichtung 38.

Die Bördeleinrichtung 28 weist vorliegend ein quer zu einer Längsachse 36 des Behältnisses 14 bewegbares Befestigungsmittel oder Befestigungselement 40 auf, das zwischen einer Position, in der das Befestigungsmittel 40 gegen die Verschlusskappe 16 gedrückt ist, und einer Position, in der es von der Verschlusskappe 16 beabstandet ist, bewegbar ist.

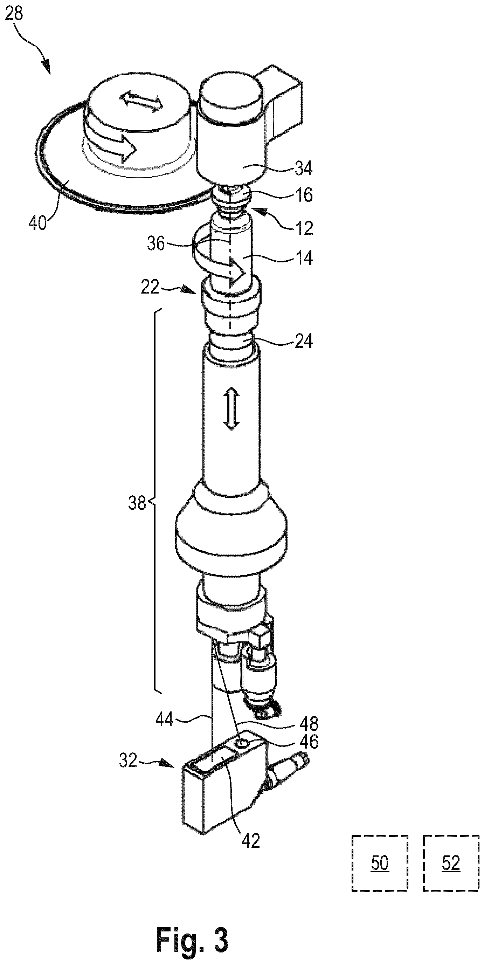

Die Figur 3 zeigt eine isometrische Ansicht einer Ausführungsform der Vorrichtung 10. Gleiche Elemente sind mit gleichen Bezugszeichen gekennzeichnet, im Folgenden wird lediglich auf die Unterschiede eingegangen.

Die in der Figur 3 gezeigte Vorrichtung 10 unterscheidet sich von der in der Figur 2 gezeigten Vorrichtung 10 dadurch, dass der Positionsgeber 32 zum Bereitstellen eines eine Hubposition des Drehtellers 22 repräsentierenden Werts ein optischer Sensor ist. Ferner ist der Antriebsstrang 37 in der Fig. 3 aus Übersichtlichkeitsgründen ausgeblendet.

Der als optische Sensor ausgebildete Positionsgeber 32 kann beispielsweise eine Strahlquelle 42 zum Aussenden eines Sendelichtstrahls 44 und einen Detektor 46 zum Empfangen eines an einer Komponente der Hubvorrichtung 38 reflektierten Empfangslichtstrahls 48 aufweisen. Anhand einer Laufzeitmessung, einer Phasenlagemessung oder einer Lasertriangulationsmessung kann so ein einen Abstand zwischen dem als optischen Sensor ausgebildeten Positionsgeber 32 und der Komponente der Hubvorrichtung 38 repräsentierender Wert, und damit eine Hubposition des Drehtellers 22, ermittelt werden.

Die Vorrichtung 10 kann des Weiteren eine Speichereinheit 50 zur Speicherung zumindest eines von dem Positionsgeber 32 ermittelten Endlagen- bzw. Hubpositionswerts und zur Speicherung zumindest eines eine Hubposition eines ordnungsgemäßen Verschlusses 12 repräsentierenden Schwellenwerts aufweisen.

Des Weiteren kann die Vorrichtung 10 eine Vergleichseinheit 52 aufweisen, die Werte, die von dem Positionsgeber 32 ermittelt wurden, mit Werten, die in der Speichereinheit 50 gespeichert sind, vergleicht, und ermittelt, ob sie oder ob sie nicht in einem ordnungsgemäßen Bereich liegen.

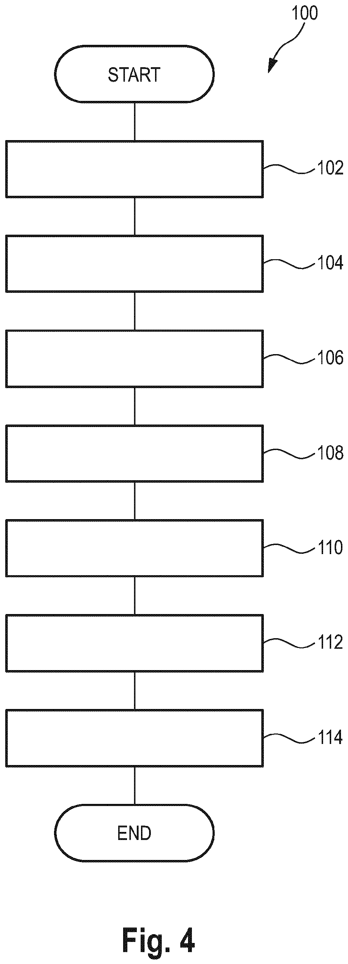

Die Figur 4 zeigt eine schematische Ansicht einer Ausführungsform eines Verfahrens 100 zum Prüfen der Dichtheit eines Verschlusses 12 eines Behältnisses 14. Das Verfahren 100 kann beispielsweise mit der Vorrichtung 10, die in den Figuren 1 bis 3 beschrieben ist, durchgeführt werden.

In einem ersten Schritt 102 des Verfahrens 100 wird eine ersten Prüfkraft auf das elastische Dichtungselement 18 ausgeübt, um eine Kompression des elastischen Dichtungselements 18 zu bewirken.

In einem weiteren Schritt 104 des Verfahrens 100 wird ein erster Endlagenwert gemessen, der eine aus der ersten Prüfkraft resultierende Hubposition des elastischen Dichtungselements 18 angibt.

In einem weiteren Schritt 106 des Verfahrens 100 wird eine Bördelvorspannkraft auf das elastische Dichtungselement 18 ausgeübt, wodurch das elastische Dichtungselement 18 gegen den Mündungsrand 20 des Behältnisses 14 gedrückt wird, und die Verschlusskappe 16 gebördelt.

In einem weiteren Schritt 108 des Verfahrens 100 wird eine zweite Prüfkraft auf das durch die gebördelte Verschlusskappe 16 vorgespannte elastische Dichtungselement 18 ausgeübt.

In einem weiteren Schritt 110 des Verfahrens 100 wird ein zweiter Endlagenwert gemessen, der eine aus der zweiten Prüfkraft resultierende Hubposition des vorgespannten elastischen Dichtungselements 18 angibt.

In einem weiteren Schritt 112 des Verfahrens 100 wird ein Vergleichswert basierend auf dem ersten Endlagenwert und dem zweiten Endlagenwert ermittelt.

In einem weiteren Schritt 114 des Verfahrens 100 wird die Dichtheit des Verschlusses 12 durch Vergleichen des Vergleichswerts mit einem vordefinierten Schwellenwert beurteilt.

In einer optionalen Ausgestaltung des Verfahrens 100 kann vorgesehen sein, dass die zweite Prüfkraft gleich der ersten Prüfkraft ist.

In einer weiteren optionalen Ausgestaltung des Verfahrens 100 kann vorgesehen sein, dass die Bördelvorspannkraft größer als die erste Prüfkraft und/oder die zweite Prüfkraft ist.

In einer weiteren optionalen Ausgestaltung des Verfahrens 100 kann vorgesehen sein, dass ein Übergang zwischen dem Ausüben der ersten Prüfkraft, dem Ausüben der Bördelvorspannkraft und dem Ausüben der zweiten Prüfkraft jeweils kontinuierlich erfolgt, ohne die entsprechende Druckkraft auf das elastische Dichtelement vollständig zu lösen.

In einer weiteren optionalen Ausgestaltung des Verfahrens 100 kann vorgesehen sein, dass zwischen dem Ausüben der ersten Prüfkraft und dem Ausüben der zweiten Prüfkraft kontinuierlich Hubpositionen des elastischen Dichtungselements 18 aufgezeichnet und gespeichert werden.

In einer optionalen Ausgestaltung des Schrittes 112 des Verfahrens 100 kann vorgesehen sein, dass der ermittelte Vergleichswert eine Differenz zwischen dem ersten Endlagenwert und dem zweiten Endlagenwert ist.

In einer optionalen Ausgestaltung des Schrittes 112 des Verfahrens 100 kann vorgesehen sein, dass der ermittelte Vergleichswert ein Quotient zwischen dem ersten Endlagenwert und dem zweiten Endlagenwert ist.

In einer optionalen Ausgestaltung des Schrittes 114 des Verfahrens 100 kann vorgesehen sein, dass wenn der ermittelte Vergleichswert von dem einen ordnungsgemäßen Verschluss 12 repräsentierenden vordefinierten Schwellenwert abweicht, der zu prüfende Verschluss 12 als nicht ordnungsgemäß eingestuft wird.

In einer weiteren optionalen Ausgestaltung des Schrittes 114 des Verfahrens 100 kann vorgesehen sein, dass der vordefinierte Schwellenwert ein Toleranzband von vordefinierten Endlagendifferenzen oder vordefinierten Endlagenquotienten ordnungsgemäßer Verschlüsse 12 aufweist, wobei der zu prüfende Verschluss 12 als ordnungsgemäß eingestuft wird, wenn der ermittelte Vergleichswert innerhalb des Toleranzbandes liegt.

In einer weiteren optionalen Ausgestaltung des Schrittes 114 des Verfahrens 100 kann vorgesehen sein, dass zur Bewertung der Dichtheit des Verschlusses 12 zusätzlich zu dem Schritt des Vergleichens des ermittelten Vergleichswertes mit dem vordefinierten Schwellenwert der zweite Endlagenwert, der die aus der zweiten Prüfkraft resultierende Hubposition des vorgespannten elastischen Dichtungselements 18 angibt, mit einem vordefinierten Endlagenwert eines ordnungsgemäßen Verschlusses 12 verglichen wird, wobei der vordefinierte Endlagenwert des ordnungsgemäßen Verschlusses 12 eine Hubposition eines mit der zweiten Prüfkraft beaufschlagten elastischen Dichtungselements 18 des ordnungsgemäßen Verschlusses angibt.

In einer weiteren optionalen Ausgestaltung des Schrittes 114 des Verfahrens 100 kann vorgesehen sein, dass zur Bewertung der Dichtheit des Verschlusses 12 zusätzlich zu dem Schritt des Vergleichens des ermittelten Vergleichswertes mit dem vordefinierten Schwellenwert der erste Endlagenwert, der die aus der ersten Prüfkraft resultierende Hubposition des elastischen Dichtungselements 18 angibt, mit einem vordefinierten Endlagenwert eines ordnungsgemäßen Verschlusses 12 verglichen wird, wobei der vordefinierte Endlagenwert des ordnungsgemäßen Verschlusses 12 eine Hubposition eines mit der ersten Prüfkraft beaufschlagten elastischen Dichtungselements 18 des ordnungsgemäßen Verschlusses angibt.

In einer weiteren optionalen Ausgestaltung des Verfahrens 100 kann vorgesehen sein, dass zumindest einer der Schritte des Messens 104 des aus der ersten Prüfkraft resultierenden ersten Endlagenwerts oder des Messens 110 des aus der zweiten Prüfkraft resultierenden zweiten Endlagenwerts basierend auf einer optischen Entfernungsmessung und/oder einer magnetischen Längenmessung erfolgt.

In einer weiteren optionalen Ausgestaltung des Verfahrens 100 kann vorgesehen sein, dass das Ausüben 102 der ersten Prüfkraft und das Ausüben 108 der zweiten Prüfkraft jeweils durch eine Antriebseinheit 26, insbesondere einen Hub-Dreh-Motor, betätigt wird, wobei zumindest einer der Schritte des Messens 104 des ersten Endlagenwerts oder des Messens 110 des zweiten Endlagenwerts basierend auf einer Positionserfassung in der Antriebseinheit 26 erfolgt.

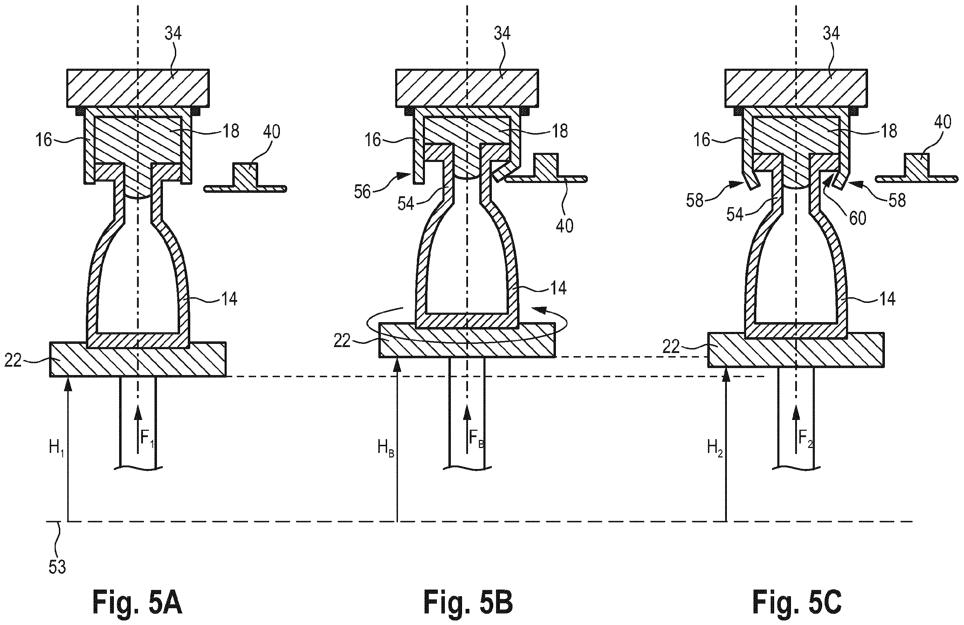

Die Figuren 5A bis 5C zeigen einen schematischen Ablauf einer Ausführungsform des Verfahrens 100. Das mit dem Verschluss 12 versehene Behältnis 14 ist dabei zwischen dem Drehteller 22 und der Aufnahme 34 bereitgestellt.

Unter Bezugnahme auf die Figur 5A wird das elastische Dichtungselement 18 noch vor dem eigentlichen Bördelvorgang mit einer ersten axialen Prüfkraft F1 beaufschlagt, wodurch das elastische Dichtungselement 18 komprimiert wird. Infolgedessen wird der die Druckkraft F1 über das Behältnis 14 auf das flexible Dichtungselement 18 ausübende Drehteller 22 aus einer Ruhelage 53, in welcher der Drehteller 22 vorzugsweise keine Druckkraft auf das flexible Dichtungselement 18 ausübt, in eine erste Hubposition H1 bewegt. Die erste Hubposition H1 wird gemessen und in Form eines ersten Endlagenwerts gespeichert. Die Verschlusskappe 16 verschließt das Behältnis 14 hierbei noch nicht, so dass das Befestigungsmittel 40 in der Figur 5A von der Verschlusskappe 16 beabstandet ist.

Während des Bördelvorgangs, dargestellt in der Fig. 5B, wird die axiale Druckkraft vorzugsweise bis auf die Bördelvorspannkraft FB erhöht, so dass das flexible Dichtungselement 18 ausreichend komprimiert wird, wodurch an einem Rollrand 54 des Behältnisses 14 ein Überstand 56 der Verschlusskappe 16 erzielt wird. Dieser Überstand 56 der Verschlusskappe 16 wird durch das Befestigungsmittel 40 ,z.B. eine Bördelrolle, an den Rollrand 54 des Behältnisses 14 gebördelt, während der die Bördelvorspannkraft FB auf das flexible Dichtungselement 18 ausübende Drehteller 22 mit dem daran gekoppelten Behältnis 14 in Drehung versetzt ist.

Da der Betrag der Bördelvorspannkraft FB vorzugsweise größer als der Betrag der ersten Prüfkraft F1 ist, wird das elastische Dichtelement 18 unter Einwirkung der Bördelvorspannkraft FB stärker zusammengedrückt als in der in Figur 5A dargestellten Konfiguration. Folglich stellt sich während des Bördelprozesses eine Hubposition HB des Drehtellers 22 ein, die größer als die in der Fig. 5A gezeigte erste Hubposition H1 des Drehtellers 22 ist. Nach Fertigstellung der Bördelung wird das Befestigungsmittel 40 außer Anlage mit der Verschlusskappe 16 gebracht und die Bördelvorspannkraft FB zumindest teilweise gelöst.

Ist die Bördelung nicht ordnungsgemäß durchgeführt worden, kann sich der gebördelte Überstand 56 der Verschlusskappe 16 lösen, so dass das elastische Dichtungselement 18 zumindest teilweise dekomprimiert wird, wodurch sich die Verschlusskappe 16 und das Behältnis 14 relativ zueinander entfernen.

Unter Bezugnahme auf die Figur 5C wird anschließend das elastische Dichtungselement 18 mit einer zweiten Prüfkraft F2 beaufschlagt. Erneut wird die dazugehörige Hubposition H2 gemessen und in Form eines zweiten Endlagenwerts gespeichert. Die zweite Prüfkraft F2 ist vorzugsweise gleich der ersten Prüfkraft F1 und vorzugsweise kleiner als die Bördelvorspannkraft FB. Auf diese Weise wird sichergestellt, dass die Hubposition H2 des Drehtellers 22 während des Ausübens der zweiten Prüfkraft F2 auf das flexible Dichtungselement 18 kleiner als die aus der Bördelvorspannkraft FB resultierende Hubposition HB ist. Auf diese Weise kann sichergestellt werden, dass während des Ausübens der zweiten Prüfkraft F2 auf das flexible Dichtungselement 18 die gebördelten Flanken 58 der Verschlusskappe von dem unteren Flaschenhals 60 nicht abheben, wodurch eine zerstörungsfreie Prüfung der Dichtheit des Verschlusses 12 ermöglicht wird.

Schließlich wird basierend auf dem ersten Endlagenwert und dem zweiten Endlagenwert ein Vergleichswert ermittelt und die Dichtheit des Verschlusses 12 durch Vergleichen des Vergleichswerts mit einem vordefinierten Schwellenwert beurteilt.

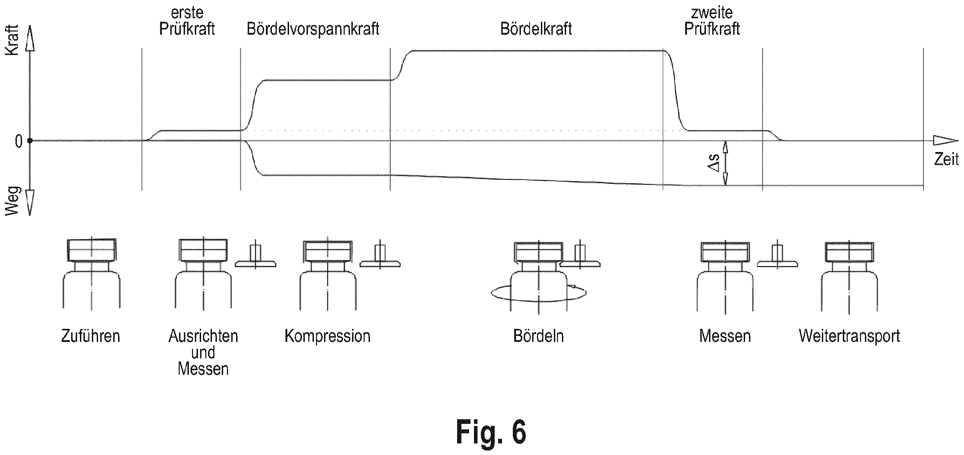

Die Fig. 6 zeigt ein Kraft-Weg-Diagramm gemäß einer Ausführungsform eines Verfahrens 100. Dabei ist graphisch sowohl der auf das elastische Dichtungselement 18 ausgeübte Druckkraftverlauf als auch der aus der Druckkraft resultierende Hubpositions- bzw. Wegverlauf einer Komponente der Vorrichtung 10 zum Prüfen der Dichtheit des Verschlusses 12, z.B. eine Hubposition eines als Drehteller ausgebildeten Prüfblocks 22 oder eine Hubposition einer höhenbewegbaren Antriebsachse, gegen die Zeit aufgetragen.

Die in der Fig. 6 dargestellte "Bördelkraft" setzt sich aus der Bördelvorspannkraft und einer Prozesskraft zusammen. Diese Prozesskraft entsteht, wenn das freie Ende 56 der Verschlusskappe 16 von dem Befestigungsmittel 40 umgebogen wird, wobei die Verschlusskappe 16 durch das Bördeln zusätzlich nach unten gezogen wird, wodurch eine zusätzliche Druckkraft auf das elastische Dichtelement wirkt.

In einem optionalen ersten Schritt wird das Behältnis 14 mit der Verschlusskappe 16 und dem zwischen der Verschlusskappe 16 und dem Mündungsrand 20 des Behältnisses 14 angeordneten flexiblen Dichtungselement 18 bereitgestellt. Beispielsweise kann das Behältnis 14 gemeinsam mit der Verschlusskappe 16 und dem flexiblen Dichtungselement 18 einer Vorrichtung 10 gemäß den Figuren 1 bis 3 zugeführt werden.

Das elastische Dichtungselement 18 wird vor dem eigentlichen Bördelvorgang mit einer ersten axialen Prüfkraft beaufschlagt, vgl. hierzu den Schritt 102 des Verfahrens 100. In dem dargestellten Kraft-Weg-Diagramm ist die erste Prüfkraft derart gewählt, dass der aus der ersten Prüfkraft resultierende Hub aus der Ruhelage nur geringfügig ausfällt. Der Betrag der ersten Prüfkraft liegt dabei vorzugsweise in einem Bereich, der ausreichend ist, um das Behältnis 14, das elastische Dichtungselement 18 und die Verschlusskappe 16 vor dem Bördelvorgang auszurichten und aneinanderzulegen.

In einem weiteren Schritt 106 des Verfahrens 100 wird die auf das flexible Dichtungselement 18 ausgeübte Druckkraft bis auf den Wert der Bördelvorspannkraft erhöht, wodurch das flexible Dichtungselement 18 komprimiert wird. Hierbei befindet sich das Befestigungsmittel 40 der Bördeleinrichtung 28 zunächst außer Anlage mit der Bördelverschlusskappe 16. Sobald das Befestigungsmittel 40 zum Bördeln des freien Endes 56 der Verschlusskappe 16 mit dieser in Anlage gebracht wird, wird auf die Verschlusskappe 16 eine zusätzliche Abwärtskraft bzw. Prozesskraft ausgeübt. Die Summe aus der Bördelvorspannkraft und der Prozesskraft ist in der Fig. 6 als Bördelkraft dargestellt. Wie der Fig. 6 zu entnehmen ist, nimmt der Hub aus der Ruhelage infolge des Bördelns zu.

In einem weiteren Schritt 108 des Verfahrens 100 wird das elastische Dichtungselement 18 mit einer zweiten Prüfkraft beaufschlagt. In dem dargestellten Kraft-Weg-Diagramm ist die zweite Prüfkraft gleich der ersten Prüfkraft und geringer als die Bördelvorspannkraft. Da die zweite Prüfkraft geringer ist als die Bördelvorspannkraft, wird das flexible Dichtungselement 18 nicht weiter bewegt, so dass die der zweiten Prüfkraft entsprechende Hubposition identisch ist mit der Hubposition am Ende des Bördelvorgangs.

Schließlich wird basierend auf dem der ersten Prüfkraft entsprechenden Hubpositionswert und dem der zweiten Prüfkraft entsprechenden Hubpositionswert ein Vergleichswert ermittelt und die Dichtheit des Verschlusses 12 durch Vergleichen des Vergleichswerts mit einem vordefinierten Schwellenwert beurteilt. Auf diese Weise wird bei der Beurteilung der Verschlusssicherheit des Verschlusses 12 sowohl der Zustand vor der Bördelung als auch der Zustand nach der Bördelung berücksichtigt. Ferner ist hierdurch eine zerstörungsfreie Prüfung ermöglicht.

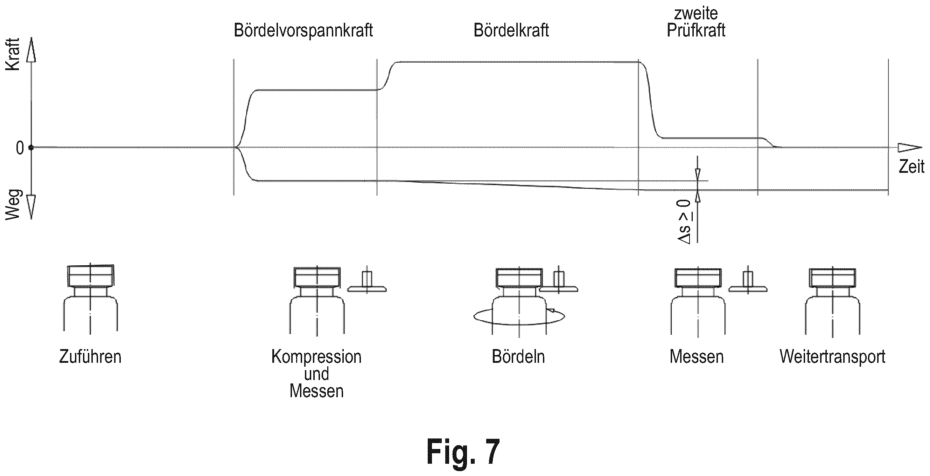

Die Fig. 7 zeigt ein Kraft-Weg-Diagramm gemäß einer Ausführungsform eines Verfahrens 100. Das in der Fig. 7 gezeigte Kraft-Weg-Diagramm unterscheidet sich von dem in der Fig. 6 gezeigten Kraft-Weg-Diagramm dadurch, dass zur Beurteilung der Dichtheit des Verschlusses 12 ein Vergleichswert basierend auf einem der zweiten Prüfkraft entsprechenden Hubpositionswert und einem der Bördelvorspannkraft entsprechenden Hubpositionswert ermittelt wird. Die Beurteilung der Dichtheit des Verschlusses 12 erfolgt durch Vergleichen des Vergleichswerts mit einem vordefinierten Schwellenwert beurteilt. Auch diese Ausführungsform ermöglicht eine zerstörungsfreie Prüfung des Verschlusses 12, lässt dabei jedoch den Zustand vor dem Bördeln unberücksichtigt.

## Patentansprüche

1. Verfahren (100) zum Prüfen der Dichtheit eines Verschlusses (12) eines Behältnisses (14), insbesondere eines pharmazeutischen oder kosmetischen Behältnisses, der eine Verschlusskappe (16) zum Verschließen des Behältnisses (14) und ein elastisches Dichtungselement (18), das zwischen der Verschlusskappe (16) und einem Mündungsrand (20) des Behältnisses (14) angeordnet ist, aufweist, wobei das Verfahren (100) die folgenden Schritte aufweist:
- Ausüben (102) einer ersten Prüfkraft auf das elastische Dichtungselement (18), um eine Kompression des elastischen Dichtungselements (18) zu bewirken;
- Messen (104) eines ersten Endlagenwerts, der eine aus der ersten Prüfkraft resultierende Hubposition des elastischen Dichtungselements (18) angibt;
- Ausüben (106) einer Bördelvorspannkraft auf das elastische Dichtungselement (18), wodurch das elastische Dichtungselement (18) gegen den Mündungsrand (20) des Behältnisses gedrückt wird, und Bördeln der Verschlusskappe (16);
- Ausüben (108) einer zweiten Prüfkraft auf das durch die gebördelte Verschlusskappe (16) vorgespannte elastische Dichtungselement; und
- Messen (110) eines zweiten Endlagenwerts, der eine aus der zweiten Prüfkraft resultierende Hubposition des vorgespannten elastischen Dichtungselements (18) angibt;
- Ermitteln (112) eines Vergleichswerts basierend auf dem ersten Endlagenwert und dem zweiten Endlagenwert; und
- Beurteilen (114) der Dichtheit des Verschlusses durch Vergleichen des Vergleichswerts mit einem vordefinierten Schwellenwert.

2. Verfahren (100) nach Anspruch 1, **dadurch gekennzeichnet, dass** die erste Prüfkraft gleich der zweiten Prüfkraft ist, oder **dadurch gekennzeichnet, dass** die erste Prüfkraft gleich der Bördelvorspannkraft ist.

3. Verfahren (100) nach Anspruch 1 oder 2, **dadurch gekennzeichnet, dass** die Bördelvorspannkraft größer als die zweite Prüfkraft ist.

4. Verfahren (100) nach einem der Ansprüche 1 bis 3, **dadurch gekennzeichnet, dass** ein Übergang zwischen dem Ausüben der ersten Prüfkraft, dem Ausüben der Bördelvorspannkraft und dem Ausüben der zweiten Prüfkraft jeweils kontinuierlich erfolgt, ohne die entsprechende Druckkraft auf das elastische Dichtelement (18) vollständig zu lösen, insbesondere wobei zwischen dem Ausüben der ersten Prüfkraft und dem Ausüben der zweiten Prüfkraft kontinuierlich Hubpositionen des elastischen Dichtungselements (18) aufgezeichnet und gespeichert werden.

5. Verfahren (100) nach einem der Ansprüche 1 bis 4, **dadurch gekennzeichnet, dass** der ermittelte Vergleichswert eine Differenz zwischen dem ersten Endlagenwert und dem zweiten Endlagenwert ist.

6. Verfahren (100) nach einem der Ansprüche 1 bis 4, **dadurch gekennzeichnet, dass** der ermittelte Vergleichswert ein Quotient zwischen dem ersten Endlagenwert und dem zweiten Endlagenwert ist.

7. Verfahren (100) nach Anspruch 5 oder 6, **dadurch gekennzeichnet, dass** wenn der ermittelte Vergleichswert von dem einen ordnungsgemäßen Verschluss (12) repräsentierenden vordefinierten Schwellenwert abweicht, der zu prüfende Verschluss (12) als nicht ordnungsgemäß eingestuft wird.

8. Verfahren (100) nach Anspruch 7, **dadurch gekennzeichnet, dass** zur Bewertung der Dichtheit des Verschlusses zusätzlich zu dem Schritt des Vergleichens des ermittelten Vergleichswertes mit dem vordefinierten Schwellenwert der zweite Endlagenwert, der die aus der zweiten Prüfkraft resultierende Hubposition des vorgespannten elastischen Dichtungselements (18) angibt, mit einem vordefinierten Endlagenwert eines ordnungsgemäßen Verschlusses (12) verglichen wird, wobei der vordefinierte Endlagenwert des ordnungsgemäßen Verschlusses (12) eine Hubposition eines mit der zweiten Prüfkraft beaufschlagten elastischen Dichtungselements (18) des ordnungsgemäßen Verschlusses (12) angibt.

9. Verfahren (100) nach Anspruch 7, **dadurch gekennzeichnet, dass** zur Bewertung der Dichtheit des Verschlusses (12) zusätzlich zu dem Schritt des Vergleichens des ermittelten Vergleichswertes mit dem vordefinierten Schwellenwert der erste Endlagenwert, der die aus der ersten Prüfkraft resultierende Hubposition des elastischen Dichtungselements (18) angibt, mit einem vordefinierten Endlagenwert eines ordnungsgemä-ßen Verschlusses (12) verglichen wird, wobei der vordefinierte Endlagenwert des ordnungsgemäßen Verschlusses (12) eine Hubposition eines mit der ersten Prüfkraft beaufschlagten elastischen Dichtungselements (18) des ordnungsgemäßen Verschlusses (12) angibt.

10. Verfahren (100) nach einem der vorhergehenden Ansprüche, **dadurch gekennzeichnet, dass** das Ausüben (102) der ersten Prüfkraft und das Ausüben (108) der zweiten Prüfkraft jeweils durch eine Antriebseinheit (26), insbesondere einen Hub-Dreh-Motor, betätigt wird, wobei zumindest einer der Schritte des Messens des ersten Endlagenwerts oder des Messens des zweiten Endlagenwerts basierend auf einer Positionserfassung in der Antriebseinheit (26) erfolgt.

11. Vorrichtung (10) zur Prüfung der Dichtheit eines Verschlusses (12) eines Behältnisses (14), insbesondere eines pharmazeutischen oder kosmetischen Behältnisses, der eine Verschlusskappe (16) zum Verschließen des Behältnisses (14) und ein elastisches Dichtungselement (18), das zwischen der Verschlusskappe (16) und einem Mündungsrand (20) des Behältnisses (14) angeordnet ist, aufweist, mit:
- einem relativ gegen den Verschluss (12) des Behältnisses (14) bewegbaren Drehteller (22) zum Ausüben einer Druckkraft auf das elastische Dichtungselement (18), um eine Kompression des elastischen Dichtungselements (18) zu bewirken, wobei der Drehteller (22) mit einer axial verschiebbaren Antriebswelle (24) einer Antriebseinheit (26) verbunden ist, und wobei der Drehteller (22) dazu ausgebildet ist, mit dem daran gekoppelten Behältnis (14) in Drehung versetzt zu werden;
- einer Bördeleinrichtung (28) zum Bördeln der Verschlusskappe (16);
- einer Steuereinheit (30) zum Steuern der Antriebseinheit (26); und
- einem Positionsgeber (32) zum Bereitstellen eines eine Hubposition des Drehtellers (22) repräsentierenden Werts;
wobei die Vorrichtung (10) des Weiteren dazu eingerichtet ist, die folgenden Schritte auszuführen:
- Ausüben (102), mittels der Antriebseinheit (26), einer ersten Prüfkraft auf das elastische Dichtungselement (18), um eine Kompression des elastischen Dichtungselements (18) zu bewirken;
- Messen (104), mittels des Positionsgebers (32), eines ersten Endlagenwerts, der eine aus der ersten Prüfkraft resultierende Hubposition des elastischen Dichtungselements (18) angibt;
- Ausüben (106), mittels der Antriebseinheit (26), einer Bördelvorspannkraft auf das elastische Dichtungselement (18), wodurch das elastische Dichtungselement (18) gegen den Mündungsrand (20) des Behältnisses gedrückt wird, und Bördeln, mittels der Bördeleinrichtung (28), der Verschlusskappe (16);
- Ausüben (108), mittels der Antriebseinheit (26), einer zweiten Prüfkraft auf das durch die gebördelte Verschlusskappe (16) vorgespannte elastische Dichtungselement;
- Messen (110), mittels des Positionsgebers (32), eines zweiten Endlagenwerts, der eine aus der zweiten Prüfkraft resultierende Hubposition des vorgespannten elastischen Dichtungselements (18) angibt;
- Ermitteln (112), mittels einer Vergleichseinheit (52), eines Vergleichswerts basierend auf dem ersten Endlagenwert und dem zweiten Endlagenwert; und
- Beurteilen (114), mittels der Vergleichseinheit (52), der Dichtheit des Verschlusses durch Vergleichen des Vergleichswerts mit einem vordefinierten Schwellenwert.

12. Vorrichtung (10) nach Anspruch 11, **dadurch gekennzeichnet, dass** die Antriebswelle (24) der Antriebseinheit (26) drehbar ausgebildet ist.

13. Vorrichtung (10) nach Anspruch 11 oder 12, **dadurch gekennzeichnet, dass** die Antriebseinheit (26) ein Hub-Dreh-Motor ist.

14. Vorrichtung (10) nach einem der Ansprüche 11 bis 13, **dadurch gekennzeichnet, dass** der Positionsgeber (32) ein Motorsensor ist, der dazu ausgebildet ist, den die Hubposition des Drehtellers (22) repräsentierenden Wert zu ermitteln, und dass die Vorrichtung (10) einen weiteren Positionsgeber (32) aufweist, wobei der weitere Positionsgeber (32) ein optischer Reflexionssensor ist, der dazu ausgebildet ist, den die Hubposition des Drehtellers (22) repräsentierenden Wert optisch zu ermitteln.

15. Vorrichtung (10) nach einem der Ansprüche 11 bis 13, **dadurch gekennzeichnet, dass** die Bördeleinrichtung (28) zumindest ein quer zu einer Längsachse (36) des Behältnisses (14) bewegbares Befestigungsmittel (40) aufweist, das zwischen einer Position, in der das Befestigungsmittel gegen die Verschlusskappe gedrückt ist, um ein freies Ende (56) der Verschlusskappe (16) plastisch zu verformen, und einer Position, in der es von der Verschlusskappe (16) beabstandet ist, bewegbar ist, insbesondere wobei die Steuereinheit (30) des Weiteren dazu ausgebildet ist, das Befestigungsmittel (40) in Anlage mit der Bördelverschlusskappe (16) zu bringen, während das Behältnis (14) in Drehung versetzt ist.

## Claims

1. A method (100) for checking the tightness of a closure (12) of a container (14), in particular a pharmaceutical or cosmetic container, the closure (12) comprising a closure cap (16) for closing the container (14) and an elastic sealing member (18) arranged between the closure cap (16) and a mouth edge (20) of the container (14), wherein the method (100) comprises the following steps:
- Exerting (102) a first test force on the elastic sealing member (18) to effect compression of the elastic sealing member (18);
- Measuring (104) a first end position value indicating a stroke position of the elastic sealing member (18) resulting from the first test force;
- Exerting (106) a crimp biasing force on the elastic sealing member (18), thereby pressing the elastic sealing member (18) against the mouth edge (20) of the container, and crimping the closure cap (16);
- Exerting (108) a second test force on the elastic sealing member biased by the crimped closure cap (16); and
- Measuring (110) a second end position value indicating a stroke position of the biased elastic sealing member (18) resulting from the second test force;
- Determining (112) a comparison value based on the first end position value and the second end position value; and
- Assessing (114) the tightness of the closure by comparing the comparison value to a predefined threshold value.

2. The method (100) as claimed in claim 1, **characterized in that** the first test force is equal to the second test force, or **characterized in that** the first test force is equal to the crimp biasing force.

3. The method (100) as claimed in claim 1 or 2, **characterized in that** the crimp biasing force is greater than the second test force.

4. The method (100) as claimed in any one of claims 1 to 3, **characterized in that** a transition between the exerting the first test force, the exerting the crimp biasing force, and the exerting the second test force each occurs continuously without completely releasing the corresponding compressive force on the elastic sealing member (18), in particular wherein, between the exerting the first test force and the exerting the second test force, stroke positions of the elastic sealing member (18) are continuously recorded and stored.

5. The method (100) as claimed in any one of claims 1 to 4, **characterized in that** the determined comparison value is a difference between the first end position value and the second end position value.

6. The method (100) as claimed in any one of claims 1 to 4, **characterized in that** the determined comparison value is a quotient between the first end position value and the second end position value.

7. The method (100) as claimed in claim 5 or 6, **characterized in that**, if the determined comparison value deviates from the predefined threshold value representing a proper closure (12), the closure (12) to be checked is classified as improper.

8. The method (100) as claimed in claim 7, **characterized in that**, for assessing the tightness of the closure, in addition to the step of comparing the determined comparison value with the predefined threshold value, the second end position value which indicates the stroke position of the biased elastic sealing member (18) resulting from the second test force is compared with a predefined end position value of a proper closure (12), wherein the predefined end position value of the proper closure (12) indicates a stroke position of an elastic sealing member (18) of the proper closure (12) subjected to the second test force.

9. The method (100) as claimed in claim 7, **characterized in that**, for assessing the tightness of the closure (12), in addition to the step of comparing the determined comparison value with the predefined threshold value, the first end position value which indicates the stroke position of the elastic sealing member (18) resulting from the first test force is compared with a predefined end position value of a proper closure (12), wherein the predefined end position value of the proper closure (12) indicates a stroke position of an elastic sealing member (18) of the proper closure (12) subjected to the first test force.

10. The method (100) as claimed in any one of the preceding claims, **characterized in that** the exerting (102) the first test force and the exerting (108) the second test force are each actuated by a drive unit (26), in particular a linear-rotary motor, wherein at least one of the steps of measuring the first end position value or measuring the second end position value is performed on the basis of a position detection in the drive unit (26).

11. An apparatus (10) for checking the tightness of a closure (12) of a container (14), in particular a pharmaceutical or cosmetic container, the closure (12) comprising a closure cap (16) for closing the container (14) and an elastic sealing member (18) arranged between the closure cap (16) and a mouth edge (20) of the container (14), comprising:
- a turntable (22) movable relatively against the closure (12) of the container (14) for exerting a compressive force on the elastic sealing member (18) to effect compression of the elastic sealing member (18), wherein the turntable (22) is connected to an axially displaceable drive shaft (24) of a drive unit (26), and wherein the turntable (22) is configured to be set in rotation with the container (14) coupled thereto;
- a crimping device (28) for crimping the closure cap (16);
- a control unit (30) for controlling the drive unit (26); and
- a position encoder (32) for providing a value representing a stroke position of the turntable (22);
wherein the apparatus is further configured to conduct the following steps:
- Exerting (102) a first test force on the elastic sealing member (18) to effect compression of the elastic sealing member (18);
- Measuring (104) a first end position value indicating a stroke position of the elastic sealing member (18) resulting from the first test force;
- Exerting (106) a crimp biasing force on the elastic sealing member (18), thereby pressing the elastic sealing member (18) against the mouth edge (20) of the container, and crimping the closure cap (16);
- Exerting (108) a second test force on the elastic sealing member biased by the crimped closure cap (16); and
- Measuring (110) a second end position value indicating a stroke position of the biased elastic sealing member (18) resulting from the second test force;
- Determining (112) a comparison value based on the first end position value and the second end position value; and
- Assessing (114) the tightness of the closure by comparing the comparison value to a predefined threshold value.

12. The apparatus (10) as claimed in claim 11, **characterized in that** the drive shaft (24) of the drive unit (26) is configured to be rotatable.

13. The apparatus (10) as claimed in claim 11 or 12, **characterized in that** the drive unit (26) is a linear-rotary motor.

14. The apparatus (10) as claimed in any one of claims 11 to 13, **characterized in that** the position encoder (32) is a motor sensor configured to determine the value representing the stroke position of the turntable (22), and **in that** the apparatus (10) comprises a further position encoder (32), wherein the further position encoder (32) is an optical reflection sensor configured to optically determine the value representing the stroke position of the turntable (22).

15. The apparatus (10) as claimed in any one of claims 11 to 13, **characterized in that** the crimping device (28) comprises at least one fixing means (40) movable transversely to a longitudinal axis (36) of the container (14), which is movable between a position in which the fixing means is pressed against the closure cap to plastically deform a free end (56) of the closure cap (16) and a position in which it is spaced from the closure cap (16), in particular wherein the control unit (30) is further configured to bring the fixing means (40) into abutment with the crimp closure cap (16) while the container (14) is set in rotation.

## Revendications

1. Procédé (100) permettant de vérifier l'étanchéité d'une fermeture (12) d'un récipient (14), en particulier d'un récipient pharmaceutique ou cosmétique, laquelle fermeture présente un capuchon de fermeture (16) pour la fermeture du récipient (14) et un élément d'étanchéité élastique (18) disposé entre le capuchon de fermeture (16) et un bord d'embouchure (20) du récipient (14), dans lequel le procédé (100) présente les étapes suivantes :
- application (102) d'une première force de vérification sur l'élément d'étanchéité élastique (18) afin de provoquer une compression de l'élément d'étanchéité élastique (18) ;
- mesure (104) d'une première valeur de fin de course qui indique une position de course de l'élément d'étanchéité élastique (18) résultant de la première force de vérification ;
- application (106) d'une force de précontrainte de sertissage sur l'élément d'étanchéité élastique (18), moyennant quoi l'élément d'étanchéité élastique (18) est pressé contre le bord d'embouchure (20) du récipient, et sertissage du capuchon de fermeture (16) ;
- application (108) d'une seconde force de vérification sur l'élément d'étanchéité élastique précontraint par le capuchon de fermeture (16) serti ; et
- mesure (110) d'une seconde valeur de fin de course qui indique une position de course de l'élément d'étanchéité élastique (18) précontraint résultant de la seconde force de vérification ;
- détermination (112) d'une valeur de comparaison sur la base de la première valeur de fin de course et de la seconde valeur de fin de course ; et
- évaluation (114) de l'étanchéité de la fermeture en comparant la valeur de comparaison avec une valeur seuil prédéfinie.

2. Procédé (100) selon la revendication 1, **caractérisé en ce que** la première force de vérification est égale à la seconde force de vérification, ou **caractérisé en ce que** la première force de vérification est égale à la force de précontrainte de sertissage.

3. Procédé (100) selon la revendication 1 ou 2, **caractérisé en ce que** la force de précontrainte de sertissage est supérieure à la seconde force de vérification.

4. Procédé (100) selon l'une des revendications 1 à 3,
**caractérisé en ce qu'**une transition entre l'application de la première force de vérification, l'application de la force de précontrainte de sertissage et l'application de la seconde force de vérification est effectuée respectivement en continu, sans relâcher complètement la force de pression correspondante sur l'élément d'étanchéité élastique (18), en particulier dans lequel des positions de course de l'élément d'étanchéité élastique (18) sont enregistrées et mémorisées en continu entre l'application de la première force de vérification et l'application de la seconde force de vérification.

5. Procédé (100) selon l'une des revendications 1 à 4,
**caractérisé en ce que** la valeur de comparaison déterminée est une différence entre la première valeur de fin de course et la seconde valeur de fin de course.

6. Procédé (100) selon l'une des revendications 1 à 4,
**caractérisé en ce que** la valeur de comparaison déterminée est un quotient entre la première valeur de fin de course et la seconde valeur de fin de course.

7. Procédé (100) selon la revendication 5 ou 6, **caractérisé en ce que,** si la valeur de comparaison déterminée diffère de la valeur seuil prédéfinie représentant une fermeture (12) correcte, la fermeture (12) à vérifier est classée comme non correcte.

8. Procédé (100) selon la revendication 7, **caractérisé en ce que,** pour l'évaluation de l'étanchéité de la fermeture, en plus de l'étape de comparaison de la valeur de comparaison déterminée avec la valeur seuil prédéfinie, la seconde valeur de fin de course indiquant la position de course de l'élément d'étanchéité élastique (18) précontraint résultant de la seconde force de vérification est comparée avec une valeur de fin de course prédéfinie d'une fermeture (12) correcte, dans lequel la valeur de fin de course prédéfinie de la fermeture (12) correcte indique une position de course d'un élément d'étanchéité élastique (18) de la fermeture (12) correcte sollicité par la seconde force de vérification.

9. Procédé (100) selon la revendication 7, **caractérisé en ce que,** pour l'évaluation de l'étanchéité de la fermeture (12), en plus de l'étape de comparaison de la valeur de comparaison déterminée avec la valeur seuil prédéfinie, la première valeur de fin de course indiquant la position de course de l'élément d'étanchéité élastique (18) résultant de la première force de vérification est comparée avec une valeur de fin de course prédéfinie d'une fermeture (12) correcte, dans lequel la valeur de fin de course prédéfinie de la fermeture (12) correcte indique une position de course d'un élément d'étanchéité élastique (18) de la fermeture (12) correcte sollicité par la première force de vérification.

10. Procédé (100) selon l'une des revendications précédentes, **caractérisé en ce que** l'application (102) de la première force de vérification et l'application (108) de la seconde force de vérification sont respectivement actionnées par une unité d'entraînement (26), en particulier un moteur de levage-rotation, dans lequel au moins l'une parmi les étapes de mesure de la première valeur de fin de course ou de mesure de la seconde valeur de fin de course est effectuée sur la base d'une détection de position dans l'unité d'entraînement (26).

11. Dispositif (10) permettant de vérifier l'étanchéité d'une fermeture (12) d'un récipient (14), en particulier d'un récipient pharmaceutique ou cosmétique, laquelle fermeture présente un capuchon de fermeture (16) pour la fermeture du récipient (14) et un élément d'étanchéité élastique (18) disposé entre le capuchon de fermeture (16) et un bord d'embouchure (20) du récipient (14), comportant :
- un plateau tournant (22) mobile par rapport à la fermeture (12) du récipient (14) pour l'application d'une force de pression sur l'élément d'étanchéité élastique (18) afin de provoquer une compression de l'élément d'étanchéité élastique (18), dans lequel le plateau tournant (22) est relié à un arbre d'entraînement (24) pouvant être déplacé axialement d'une unité d'entraînement (26), et dans lequel le plateau tournant (22) est conçu pour être entraîné en rotation avec le récipient (14) accouplé à celui-ci ;
- un appareil de sertissage (28) permettant de sertir le capuchon de fermeture (16) ;
- une unité de commande (30) permettant de commander l'unité d'entraînement (26) ; et
- un capteur de position (32) permettant de fournir une valeur représentant une position de course du plateau tournant (22) ;
dans lequel le dispositif (10) est en outre configuré pour exécuter les étapes suivantes :
- application (102), au moyen de l'unité d'entraînement (26), d'une première force de vérification sur l'élément d'étanchéité élastique (18) afin de provoquer une compression de l'élément d'étanchéité élastique (18) ;
- mesure (104), au moyen du capteur de position (32), d'une première valeur de fin de course qui indique une position de course de l'élément d'étanchéité élastique (18) résultant de la première force de vérification ;
- application (106), au moyen de l'unité d'entraînement (26), d'une force de précontrainte de sertissage sur l'élément d'étanchéité élastique (18), moyennant quoi l'élément d'étanchéité élastique (18) est pressé contre le bord d'embouchure (20) du récipient, et sertissage, au moyen de l'appareil de sertissage (28), du capuchon de fermeture (16) ;
- application (108), au moyen de l'unité d'entraînement (26), d'une seconde force de vérification sur l'élément d'étanchéité élastique précontraint par le capuchon de fermeture (16) serti ;
- mesure (110), au moyen du capteur de position (32), d'une seconde valeur de fin de course qui indique une position de course de l'élément d'étanchéité élastique (18) précontraint résultant de la seconde force de vérification ;
- détermination (112), au moyen d'une unité de comparaison (52), d'une valeur de comparaison sur la base de la première valeur de fin de course et de la seconde valeur de fin de course ; et
- évaluation (114), au moyen de l'unité de comparaison (52), de l'étanchéité de la fermeture en comparant la valeur de comparaison avec une valeur seuil prédéfinie.

12. Dispositif (10) selon la revendication 11, **caractérisé en ce que** l'arbre d'entraînement (24) de l'unité d'entraînement (26) est conçu de manière à pouvoir tourner.

13. Dispositif (10) selon la revendication 11 ou 12, **caractérisé en ce que** l'unité d'entraînement (26) est un moteur de levage-rotation.

14. Dispositif (10) selon l'une des revendications 11 à 13,
**caractérisé en ce que** le capteur de position (32) est un capteur moteur qui est configuré pour déterminer la valeur représentant la position de course du plateau tournant (22), **et en ce que** le dispositif (10) présente un autre capteur de position (32), dans lequel l'autre capteur de position (32) est un capteur optique à réflexion qui est configuré pour déterminer optiquement la valeur représentant la position de course du plateau tournant (22).

15. Dispositif (10) selon l'une des revendications 11 à 13,
**caractérisé en ce que** l'appareil de sertissage (28) présente au moins un moyen de fixation (40) mobile transversalement à un axe longitudinal (36) du récipient (14), lequel moyen de fixation est mobile entre une position dans laquelle le moyen de fixation est pressé contre le capuchon de fermeture afin de déformer plastiquement une extrémité libre (56) du capuchon de fermeture (16), et une position dans laquelle il est espacé du capuchon de fermeture (16), en particulier dans lequel l'unité de commande (30) est en outre configurée pour amener le moyen de fixation (40) en appui contre le capuchon de fermeture (16) serti pendant que le récipient (14) est entraîné en rotation.
